# EUROPEAN PATENT APPLICATION

(11) **EP 2 127 940 A2**
(43) Date of publication of application: **02.12.2009**
(21) Application number: 09161398.4
(22) Date of filing: 28.05.2009
(51) Int. Cl.: B60N 2/42

(54) **Vehicle, suspension system, suspended object, and method of use thereof**

(30) Priority: 29.05.2008 IL 19180708; 07.10.2008 IL 19463608
(71) Applicant: Plasan Sasa Ltd, 13870 M.P. Marom Hagalil (IL)
(72) Inventor: Elhanati, Zohar, 12315, M.P. Galil Eylion (IL); Kachtan, Yoash, 12225, Kibbutz Dafna (IL)
(74) Representative: Minoja, Fabrizio

(57) **Abstract**

A vehicle comprising lower and upper surfaces (14,46), an object and a suspension apparatus for holding the object in a suspended position in the vehicle. The object having opposite rear and front edges, and adjacent first and second halves extending between the rear and front edges. The suspension apparatus being adapted to anchor the object to the lower surface of the vehicle via elongated suspension elements (64,92), and comprising first and second elongated suspension elements. Each elongated suspension element comprising first and second ends and an intermediate portion therebetween. The first elongated suspension element is connected via the first end thereof to a first point on the object's first half, and is connected via the second end thereof to a first point on the vehicle's lower surface disposed closer to the object's second half than to the first half thereof. The second elongated suspension element is connected via the first end thereof to a second point on the object's second half, and is connected via the second end thereof to a second point on the vehicle's lower surface disposed closer to the object's first half than to the second half thereof.

## Description

### FIELD OF THE INVENTION

This invention relates to suspension systems, objects, storage units and vehicles comprising same, as well as methods of use thereof.

### BACKGROUND OF THE INVENTION

It is known that if a vehicle is subjected to sudden external forces, such as those caused when the vehicle crashes into another object or when the vehicle is impacted by an explosion, damage to objects and injury to occupants within the vehicle will likely occur.

One type of seat known to be particularly safe when subjected to sudden external forces is a suspension seat held in a suspended position by a suspension apparatus above a floor of a vehicle. An advantage of such suspension seat may be that it distances a user seated thereon from an explosion below a vehicle. Suspension seats may comprise a seat portion and a back portion, similar to regular seats, and are normally secured to inner surfaces of the vehicle, particularly the lower and upper surfaces thereof via the suspension apparatus for holding the seat portion in a substantially horizontal orientation and the back portion in a substantially vertical orientation, thereby enabling a user to sit thereon similar to a normal seat.

A suspension apparatus may comprise elongated suspension elements for anchoring a suspension seat such that it is spaced from the floor or other inner surfaces of a vehicle it is disposed within. The elongated suspension elements of a suspension apparatus may all be non-rigid elements, meaning elements which do not transfer compression forces impacting the inner surface of the vehicle to which the elongated element is attached to the suspension seat, as would occur via rigid elements, thereby providing a high level of safety for a user of the suspension seat.

The suspension apparatus may also comprise an anchoring arrangement which includes static and/or dynamic connection elements, defined below, which engage the inner surfaces of the vehicle and suspension seat as well as engaging the elongated suspension elements of the suspension apparatus to allow it to be held in a predetermined spatial disposition. The anchoring arrangement may further comprise intermediate connection elements for connecting an elongated suspension element to a connection element on the inner surfaces of the vehicle or to the suspension seat. An example of an intermediate connection element is a carabiner.

Suspension seats having more than one operational state while suspended are known, for example from US Publication No. 2007/0170742 A1, which discloses a suspension seat having a seat portion which can be folded or pivoted between a sitting position and a storage position by raising the rear end of the seat portion.

DE 10130631 discloses a suspension seat fixed on a seat console, suspended by a support arm from the roof on the seat and/or on the seat console and/or on the support arm. The seat console is braced against the vehicle floor and/or the lower area of the side wall through connecting elements which can only transfer tensile forces and not compression forces.

### SUMMARY OF THE INVENTION

The present invention relates to vehicles, suspension systems, suspension apparatus' and objects to be suspended, storage units, and methods of use thereof. The present invention comprises a plurality of features, each of which being inventive in itself. Each inventive feature may be used in combination with other inventive features described herein or used independently thereof.

For the purposes of the specification and the claims that the terms below are defined as follows:
- "vehicle" is intended to include all types of means of transportation such as land, sea and air vehicles;
- "lower surface" and "upper surface" may respectively refer to a floor and ceiling of a vehicle and also may refer to a portion of a side wall proximate to the floor or ceiling of the vehicle;
- "substantially horizontal orientation" or like phrases, when used with reference to an element upon which other elements or people may be seated (such as a seat portion of a seat), may include an slight upward inclination away from the horizon, as long as an element or person, that the element is adapted to seat, may be seated thereon without sliding thereof;
- "elongated suspension element" is intended to include all types of suitable non-rigid elements (i.e. which do not transfer compression forces) and which are sufficiently strong to suspend heavy objects, for example having a weight of 50kg to 150kg, in a static manner, even when the objects are in a vehicle travelling under normal conditions; elongated suspension elements may be made of textile materials or materials having similar properties thereto, non-limiting examples are ropes, cables and straps; elongated suspension elements have first and second ends and an intermediate portion extending therebetween;
- "static connection element" is intended to refer to an element connected to a vehicle or object and being adapted for static connection with a portion of an elongated suspension element, non-limiting examples being eyelets or brackets; "static connection" means that a portion of an elongated suspension element which engages the static connection element cannot move with respect thereto (for example being tied thereto, or secured thereto via an intermediate connection element such as a carabiner), even when the elongated suspension element is in a non-taut state; some static connection elements could theoretically also be used for non-static connection with an elongated suspension element, however, below, where a static connection element is specified, it is to be understood that a portion of an elongated suspension element engaged thereto is done so via a static connection;
- "dynamic connection element" is intended to refer to an element connected to a vehicle or object and being adapted for dynamic connection with an elongated suspension element, non-limiting examples being pulleys or brackets; "dynamic connection" means that an intermediate portion of an elongated suspension element which engages the dynamic connection element may move with respect thereto when the elongated suspension element is in a non-taut state; some dynamic connection elements could theoretically also be used for non-dynamic connection with an elongated suspension element, however, below, where a dynamic connection element is specified, it is to be understood that a portion of an elongated suspension element engaged thereto is done so via a dynamic connection.

### Arrangement of lower elongated suspension elements

According to one inventive feature, there is provided a vehicle comprising lower and upper surfaces, an object and a suspension apparatus for holding the object in a suspended position in the vehicle; the object having opposite rear and front edges, and adjacent first and second halves extending between the rear and front edges; the suspension apparatus being adapted to anchor the object to the lower surface of the vehicle via elongated suspension elements, and comprising first and second elongated suspension elements; each elongated suspension element comprising first and second ends and an intermediate portion therebetween; the first elongated suspension element being connected via the first end thereof to a first point on the object's first half, and being connected via the second end thereof to a first point on the vehicle's lower surface disposed closer to the object's second half than to the first half thereof; the second elongated suspension element being connected via the first end thereof to a second point on the object's second half, and being connected via the second end thereof to a second point on the vehicle's lower surface disposed closer to the object's first half than to the second half thereof.

The arrangement of the first and second elongated suspension elements described above may be referred to below as the "cross-over arrangement".

One of the advantages of the vehicle above may be that, during an explosion underneath the vehicle more proximate a first side of the object than a second side, elevation and other motion on the first side of the object caused by the explosion are reduced, since the first side is anchored from a point on the lower surface of the vehicle less effected by the explosion. Additionally, since both sides of the object are anchored to the lower point in this manner they both may have this advantage.

The second ends of the first and second elongated suspension elements may be either directly or indirectly connected to the first and second on the lower surface.

In order to describe further constructional features, it should first be noted that the object may further comprise a lower portion and an upper portion. The first and second halves mentioned above may be halves of only the lower portion. The lower portion of the object may further comprise a bottom surface facing the lower surface of the vehicle. The first half of the lower portion may further comprise a first peripheral edge extending between the rear and front edges, and the second half of the lower portion further may comprise a second peripheral edge extending between the rear and front edges.

Regarding the distance between the points on the lower surface of the vehicle: the first and second points on the lower surface may be separated by a distance of at least 200mm, or by a distance having a magnitude greater than a distance between points on the first and second peripheral edges closest to the second and first points on the lower surface, in a plan view of the object and lower surface of the vehicle.

One of the advantages of increasing the distance between the points on the floor may be that the elongated suspension elements provide better anchorage of the side of the object to which they are connected, reducing the elevation and twisting motion thereof during an explosion proximate the side of the seat to which they are connected.

Regarding the position of the points on the floor, in a plan view of the object and lower surface of the vehicle: the first point on the lower surface may be spaced from the second peripheral edge in a direction away from the first peripheral edge and/or the second point on the lower surface may be spaced from the first peripheral edge in a direction away from the second peripheral edge. In such cases, the points are distanced from the object, which may be advantageous as explained above. Additionally, when the first and second points on the floor are spaced from any of the edges of the object, such arrangement may facilitate convenient access for a person to secure the elongated suspension elements to the points. Such convenient access may also be facilitated when the first point and/or the second point on the lower surface of the vehicle is spaced from the front edge of the object in a direction away from the rear edge of the object. The first point on the lower surface of the vehicle may be spaced from the second peripheral edge in a direction away from the first peripheral edge, and spaced from the front edge of the object in a direction away from the rear edge thereof. The second point on the lower surface may be spaced from the first peripheral edge in a direction away from the second peripheral edge, and spaced from the front edge of the object in a direction away from the rear edge thereof. Both of the latter two arrangements may have the advantages described above.

It should be noted however that the lower points need not necessarily be spaced from the edges of the object to allow convenient access thereto, and that an advantageous installation position may also occur when: the first and second points on the lower surface of the vehicle are closer to the front edge of the object than the rear edge thereof; or the first and second points on the object are each disposed closer to the front edge of the object than the rear edge thereof; or the first and second points on the object are disposed at corners thereof, i.e. at the intersection of the front edge and peripheral edges of the object.

When the object is in the suspension position, and hence the first and second lower elongated suspension elements are taut: in the front view of the object, an angle less than 25 degrees may be formed between the first and/or second lower elongated suspension element with the bottom surface of the lower portion of the object; in the plan view of the suspension apparatus, an X-shaped arrangement may be formed by at least a portion of the first and second lower elongated suspension elements; such X-shaped arrangement may have an angle, in the range of about 0 to 45 degrees, or about 5 to 30 degrees, formed between the first and second lower elongated suspension elements and, in the plan view of the suspension apparatus.

The suspension apparatus may further comprise third and fourth elongated suspension elements. The third elongated suspension element may be connected at a first end thereof to a third point on the object's first half, and connected at the second end thereof to a third point on the lower surface of the vehicle. The fourth elongated suspension element may be connected at the first end thereof to a fourth point on the object's second half, and connected at the second end thereof to a fourth point on the lower surface of the vehicle. Both of the second ends of the third and fourth elongated suspension elements may be either directly or indirectly connected to the third and fourth points on the lower surface. The first and second points on the object may be closer to the front edge thereof than to the rear edge thereof, and the third and fourth points on the object may be closer to the rear edge of the object than to the front edge thereof.

Regarding the position of the points on the lower surface of the vehicle: the first and third points may constitute a single spatial point and the second and fourth points may constitute a single spatial point; the first and fourth points may constitute a single spatial point and the second and third points may constitute a single spatial point; the first, second, third and fourth point may all be spaced from each other.

Regarding the arrangement of the elongated suspension elements: in a side view of the object, angles formed between the third and/or fourth elongated elements with the lower surface of the vehicle may be of smaller magnitude than angles formed between the first and/or second elongated elements with the lower surface of the vehicle.

The suspension apparatus may be free of an additional suspension element connected between the object and the lower surface of the vehicle, such connection being within a distance of 200mm of the first or second points on the object. Similarly, in a case where the first and second halves of the object each have a longitudinal dimension extending between the rear and front edges and a transverse dimension perpendicular to the longitudinal dimension, the suspension apparatus may be free of an additional suspension element connected between the object and the lower surface of the vehicle, the connection of the additional suspension element to the object being within a distance equal to the transverse dimension of the first and second halves, to the first or second points on the object.

### Tension of the elongated suspension elements

Some of the lower elongated suspension elements may be significantly more tensioned than others, which may provide a desired motion of the object during an explosion. For example, where there are elongated suspension elements connected to the object proximate to the rear edge thereof and two elongated suspension elements connected to the object proximate to the front edge thereof, the two elements connected proximate to the rear edge may be tensioned (for example using a tensioning mechanism) and the two elements connected proximate to the front edge may be loose (or relatively looser than the tensioned elongated elements).

In accordance with a first aspect of another inventive feature, there is provided a vehicle having lower and upper surfaces, and comprising an object and a suspension apparatus adapted to hold the object in a suspended position; the object having front and rear edges; the suspension apparatus comprising first, second, third and fourth elongated suspension elements, each having first and second ends, and an intermediate portion therebetween; the first ends of the first and second elongated suspension elements being connected to the object more proximate to the front edge of the thereof than to the rear edge, and connected via the second ends thereof to the lower surface of the vehicle; the first ends of the third and fourth elongated suspension elements being connected to the object more proximate to the rear edge thereof than to the front edge, and connected via the second ends thereof to the lower surface of the vehicle; the third and fourth elongated suspension elements being more tensioned than the first and second elongated suspension elements.

The elongated suspension elements may be arranged in the cross-over arrangement and any manner described hereinabove or below.

One of the advantages of such tensioning of the elongated suspension elements may be that during an explosion beneath the vehicle the rear elongated elements (the third and fourth elongated suspension elements) may become loosened from their tensioned state, projecting the object in the direction of the front edge thereof, causing the front elongated elements (the first and second elongated elements), to become tensioned and restrain movement of the object.

The object may be further connected to an upper surface of the vehicle via at least one elongated suspension element connected to the object at a portion thereof more proximate the rear edge than the front edge. In such case it will be appreciated that the relatively higher tensioning of the elongated suspension elements connected proximate to the rear edge of the object, compared with the suspension elements connected proximate to the front edge of the object, may be advantageous since a portion of the object proximate the front edge thereof is less stable during an explosion than a portion of the object proximate the rear edge thereof, since the rear edge is anchored to both the lower and upper surfaces of the vehicle. This may be of particular advantage when the first and second elongated suspension elements (i.e. the elements connected adjacent to the front edge of the object) are arranged in the cross-over arrangement.

In accordance with another aspect of the inventive feature, there is provided a method for suspending an object in a vehicle with elongated suspension elements, the object comprising lower and upper portions, the lower portion comprising a rear edge proximate the upper portion and a front edge distal therefrom, the vehicle having lower and upper surfaces; each of the elongated suspension elements comprising first and second ends and an intermediate portion extending therebetween, the method comprising:
(a) connecting the upper portion of the object to the upper surface of the vehicle via at least one of the elongated suspension elements, thereby at least partially suspending the object above the lower surface of the vehicle; connecting a first end of at least one other elongated suspension element to the object's lower portion proximate the rear edge, and connecting the second end of the same elongated suspension element to the lower surface of the vehicle; and subsequently
(b) tensioning the at least one elongated suspension element connected between the object and the lower surface of the vehicle using a tensioning mechanism; and subsequently
(c) connecting at least one other elongated suspension element to the object's lower portion proximate the front edge, and connecting the second end of the same at least one elongated suspension element to the lower surface of the vehicle.

In accordance with both aspects above, the elongated suspension elements connected to the object's lower portion proximate the front edge: may be connected by hand without the use of a tensioning mechanism; may be loose (or relatively looser than the elongated suspension elements connected to the object's lower portion proximate the rear edge).

### Indirect connection of the lower elongated suspension elements to a vehicle

According to another inventive feature, there is provide a vehicle having lower and upper surfaces, an object, and a suspension apparatus adapted for holding the object in a suspended position in the vehicle; the object having opposite rear and front edges, and adjacent first and second halves extending between the rear and front edges; the suspension apparatus comprising first and second lower elongated suspension elements adapted to anchor the object to the lower surface of the vehicle, and first and second connection elongated suspension elements; each of the elongated suspension elements comprising first and second ends and an intermediate portion therebetween; the first lower elongated suspension element being connected via a first end thereof to a first point on the object's first half, and being connected via the second end thereof to a first end of the first connection elongated suspension element; the second lower elongated suspension element being connected via the first end thereof to a second point on the object's second half, and being connected via the second end thereof to the first end of the second connection elongated suspension element; the second end of the first connection elongated suspension element being connected to a first point on the lower surface of the vehicle; the second end of the second connection elongated suspension element being connected to a second point on the lower surface of the vehicle; the first point on the vehicle's lower surface being disposed closer to the object's second half than to the first half thereof; the second point on the vehicle's lower surface being disposed closer to the object's first half than to the second half thereof.

Thus the second ends of first and second lower elongated suspension elements are indirectly connected to first and second points on the lower surface.

The second end of the first lower elongated suspension element may be connected to a first connection element disposed higher than and spaced from the first point on the lower surface of the vehicle and closer to the second half of the object than the first half thereof. The second end of the second lower elongated suspension element may be connected to a second connection element disposed higher than and spaced from a second point on the lower surface of the vehicle and closer to the first half of the object than the second half thereof.

Regarding the position of the points, when the object is in a suspended position and hence the elongated suspension elements are taut, in the plan view of the object and lower surface of the vehicle: the first point on the lower surface may be directly underneath the first connection element or spaced therefrom in a direction away from the object's first half; the second point on the lower surface may directly underneath the second connection element or spaced therefrom in a direction away from the object's second half. Such positioning may keep the elongated suspension elements taut.

The suspension apparatus may further comprise third and fourth lower elongated suspension elements. The third lower elongated suspension element may be connected at a first end thereof to a third point on the object's first half. The fourth lower elongated suspension element may be connected at the first end thereof to a fourth point on the object's second half. In the plan view of the object and lower surface of the vehicle the first and second points on the object may be closer to the front edge thereof than the rear edge and the third and fourth points on the object may be closer to the rear edge thereof than the front edge. The third lower elongated suspension element may be connected to the first connection element and the fourth lower elongated suspension element may be connected to the second connection element, or vice versa.

The vehicle may further comprise an elevated floor disposed above and spaced from at least a portion of the lower surface. In such case, the lower elongated suspension elements may be connected to the connection suspension elements at a height higher than the height of the floor.

### Fast Release Latches for pivoting lower portions

Yet another inventive feature provides a suspension system for use in a vehicle having a lower surface; the suspension system comprising an object and a suspension apparatus for holding the object in a suspended position in the vehicle; the object comprising a lower portion and an upper portion, the lower portion of the object being biased for pivotal motion towards the upper portion; the suspension apparatus comprising at least one elongated suspension element adapted to anchor the lower portion of the object to the lower surface of the vehicle in the suspended position, and a fast release detachment mechanism connected to the at least one elongated suspension element; the fast release detachment mechanism being adapted to be brought from an attached state to a detached state; wherein when the object is held in a suspended position and the fast release detachment mechanism is in the attached state, the lower portion of the object is arrested from pivoting towards the upper portion thereof by connection of the elongated suspension element between the lower portion and the lower surface of the vehicle, and when the fast release detachment mechanism is brought to the detached state, the lower portion of the object is no longer connected to the lower surface of the vehicle via the elongated suspension element allowing pivotal motion of the object's lower portion.

### Deployable back portion of a seat

Yet another inventive feature may provide a suspension seat adapted to be brought from a deployed state, which enables a person to sit thereon with their back resting against a back portion of the seat, to an undeployed state, in which at least a part of the back portion may be moved sufficiently so as to allow a person passage through a back-support region previously obstructed by the back portion in the deployed state.

According to one aspect of this inventive feature, there is provided a suspension system comprising a suspension seat and a suspension apparatus for use in a vehicle having lower and upper surfaces; the suspension seat including a seat portion and a back portion; the suspension apparatus being adapted to engage the lower and upper surfaces of the vehicle and to suspend therebetween the suspension seat with the seat portion in a substantially horizontal orientation; the back portion being adapted to be brought to a deployed state and an undeployed state, wherein in the deployed state the back portion is in a substantially vertical orientation occupying a back-support region of the suspension system above the seat portion, and in the undeployed state the back portion has at least a part thereof moved away from the back-support region to enable passage through the back-support region of the suspension apparatus.

In the deployed state the back portion may be attached to the suspension apparatus, and in the undeployed state the back portion may be detached from the suspension apparatus. The at least part of the back portion may be detachably attachable to the suspension apparatus. Such detachable attachment may be accomplished by the at least part of the back portion comprising at least one fastener element for connection to the suspension apparatus. In such case, the suspension apparatus may further comprise a fastener element adapted to engage the at least one fastener element of the back portion, wherein the fastener element of the suspension apparatus is disposed closer to the upper surface than the lower surface of the vehicle, when the suspension seat is suspended in the vehicle. While only a part of the back portion may be detached, it should be understood that the entire back portion may be adapted to be detached from the suspension apparatus to enable passage through the back-support region of the suspension apparatus, in which case the entire back portion may be detached from the suspension apparatus in the undeployed state.

The seat portion may be adapted to remain in a substantially horizontal orientation when the back portion is in the undeployed state. The seat portion may have opposite rear and front edges, adjacent first and second halves extending between the rear and front edges, and a bottom surface. The rear edge being closer to the back portion than the front edge. It will be appreciated, that seat portions may not necessarily be square or rectangular shaped.

The back portion and the seat portion each may be integrally and pivotally joined along a merging line. Alternatively, the back portion and seat portion may, for example, be two separate portions or completely detachably attachable portions.

The suspension apparatus may include two spaced apart and substantially vertical elongated suspension elements attached to the back portion, when the back portion is in the deployed state. In such case the back-support region may be constituted by an area above the seat portion and between portions of the vertical elongated suspension elements. The suspension apparatus may further include a substantially horizontal stabilizing element attached to both of the vertical elongated suspension elements and disposed above the back-support region, for providing structural support to the suspension apparatus. The suspension apparatus may comprise at least one elongated suspension element. It will be appreciated that the suspension apparatus may be free of rigid elongated suspension elements adapted for connection to the lower or upper surfaces of the vehicle.

The back-support region may have a horizontal dimension of at least 50 centimeters. The back-support region, disposed above the seat portion, may have a vertical dimension of at least 80 centimeters. Such dimensions may allow the back-support region to be of sufficient size to allow passage therethrough.

According to another aspect of the inventive feature, there is further provided a vehicle having a passageway and lower surface and upper surfaces, the vehicle comprising a suspension seat and a suspension apparatus adapted for holding the suspension seat in a suspended position in the vehicle; the suspension seat including a seat portion and a back portion; the suspension apparatus comprising at least one suspension element and comprising plurality of connection elements engaging the suspension seat and points on the lower and upper surfaces of the vehicle disposed above and below a portion of the passageway; the suspension apparatus being adapted to suspend the suspension seat in the suspended position in said portion of the passageway, with the seat portion in a substantially horizontal orientation and the back portion in a substantially vertical orientation, via connection of the at least one suspension element with the connection elements; the back portion of the suspension seat being adapted to be brought to a deployed state and an undeployed state; wherein in the deployed state the back portion is attached to the suspension apparatus above the seat portion in the substantially vertical orientation and passage is prevented through the portion of the passageway via a back support region of the suspension apparatus, and in the undeployed state at least a part of the back portion is detached from the suspension apparatus enabling passage through the portion of the passageway via the back support region of the suspension apparatus.

The vehicle may comprise first and second areas separated by an internal partition wall, the partition wall being formed with an opening allowing passage between the first and second areas. In such case the opening constitutes the portion of the passageway mentioned above. The vehicle may comprise an outer wall, the outer wall being formed with an exit allowing passage into and out of the vehicle. In such case the exit may constitute the portion of the passageway mentioned above.

In accordance with a further aspect of this inventive feature, there is provided a vehicle having a passageway and suspension system, the suspension system comprising a suspension seat at least partially blocking a portion of the passageway when in a first state and enabling passage through the portion of the passageway when in a second state.

### Suspension of more than one object

In accordance with a first aspect of the inventive feature, there is provided a suspension system for use in a vehicle; the suspension system comprising a first object and a suspension apparatus for holding the first object in a suspended position in a vehicle; the suspension apparatus comprising at least one elongated suspension element adapted to hold the first object in the suspended position; the suspension apparatus and/or the first object being adapted to at least partially suspend an additional object, the additional object being disposed at a height above the first object or at its side when the first object is seen in the front view.

The first object may further comprise a detachably attachable engagement member secured thereto adapted for attachment of the additional object. The engagement member may be a rigid elongated object, such as a rod, or the engagement member may be a clamp-like member adapted to at least partially lockingly receive therein a rigid elongated member, such as a rod.

The object may further comprise a handle adapted to release the additional object from an attached state.

The object may be a suspension seat comprising a seat portion and a back portion, and the engagement member may be mounted on the seat portion.

The suspension system may further comprise a storage unit adapted for detachable attachment to the engagement member. The storage unit may be adapted to hold ammunition. Notably, it may be advantageous to store ammunition in a suspended position, and thereby distance it from an area which may be directly impacted by an explosion.

The additional object may be a storage unit.

In accordance with another aspect of the inventive feature, there is provided a suspension system for use in a vehicle having upper and lower surfaces; the suspension system comprising an object, a suspension apparatus for holding the object in a suspended position in the vehicle, and a storage unit; the object having a lower portion and an upper portion; the suspension apparatus comprising at least one upper elongated suspension element adapted to anchor the upper portion of the object to the upper surface of the vehicle in the suspended position; the storage unit being connected to the at least one upper elongated suspension element.

The storage unit may be adapted to be mounted at a height higher than the upper portion of the object (i.e. above the object, in a front or side view of the object).

The object may have a first substantially vertical portion and a second substantially horizontal portion extending from the first portion. In such case the storage unit may be positioned such that at least a majority thereof is not disposed above the second portion, in a plan view of the object, or the entire storage unit may be not disposed above the second portion.

When a person is to sit on the object, such as when the object is a seat and the first portion constitutes a back portion and the second portion constitutes a seat portion, such positioning of the storage unit, not above the seat portion and hence a head of a user sitting thereon, may have a safety advantage.

The storage unit may be made of non-rigid material, for example a flexible net. When there is a plurality of upper elongated suspension elements, the net may be adapted to extend between them to define a storage area therebetween. The storage unit may be made of fabric material. The storage unit may be free of any rigid elements.

The additional object may be held in a suspended position by two or more suspended objects.

According to yet another aspect of the inventive feature, there is provided a suspension system for use in a vehicle comprising lower and upper surfaces, the suspension system comprising first and second objects, a suspension apparatus, and a platform; each of the first and second objects being adapted to be held by the suspension apparatus in a suspended position; the suspension system being adapted to at least partially suspend the platform via the first and second objects.

The suspension apparatus may comprise one or more elongated suspension elements and the first and second objects may be suspended by different such suspension elements or by different portions of one such suspension element.

The platform may be free of elongated suspension elements directly connected to the upper or lower surfaces of the vehicle.

The platform may be suspended solely by the first and second objects.

Thus the suspension system may save space by not requiring room in a vehicle for additional elongated suspension elements adapted to suspend a platform. Additionally, installation and removal of items mounted on the platform may be faster than installation and removal of items connected to the vehicle via a suspension apparatus.

When each of the first and second objects further have aligned bottom surfaces, the platform may be constituted by a bridge section extending between the first object and the second object aligned with the bottom surfaces of the lower portions.

An item may be mounted on the platform in a pivotal manner. Such item may be a seat, frame, stretcher, storage unit, etc. In a case where the item may be adapted to pivot, access to storage areas or access points of a vehicle may become accessible. Such feature may be advantageous in vehicles which are lacking in space. Notably, suspension seats and suspended objects normally are connected to the roof via suspension elements and are not adapted for pivotal motion to provide access therebehind.

The platform may be constituted by an elevated floor spaced from the lower surface of the vehicle and extending between the first and second objects. The elevated floor may be spaced at least 250mm lower than the bottom surface of the first and/or second object, and preferably at least 300mm. The elevated floor may be adapted to suspend an item thereon.

Such elevated floor may be advantageous in that it may provide protection against an explosion under the lower surface of a vehicle, while allowing a user to feel more comfort than when they are forced to put their feet in a restricted position, such as elevated on a foot rest.

According to a further aspect there is provided a vehicle having lower and upper surfaces and comprising a suspension system having any of the features of the previous aspect. In such case, the distance from a portion of the upper surface of the vehicle to a lower portion of an object directly therebelow, in the plan view, may be at least 1000 mm or greater. This may be to ensure that a person seated on the object (or a seat mounted thereon) is sufficiently spaced from the upper surface of the vehicle.

The elevated floor may be spaced from the lower surface of the vehicle a distance of between about 50 mm to 150 mm, and preferably about 100 mm, to ensure ample spacing from an explosive impact to the lower surface.

Other dimensions of the elevated floor may include: when the object's front edge has a length, the elevated floor may have a width having a magnitude of length greater than the length of the front edge; a dimension perpendicular to the width of the elevated floor may be of a magnitude of length greater than 250 mm.

The elevated floor may further comprise a planar surface, a plurality of connected rigid support members parallel with the planar surface and upon which the surface is mounted, and a plurality of rigid connection members oriented transverse to the rigid support members; each of the rigid connection members comprising a lower end, an upper end, and an intermediate portion extending therebetween, the lower end being connected to one of the rigid support members, and the upper end connected to one of the objects.

Similar to above, each object may further comprise a detachably attachable engagement member. Where there is more than one object with such members, the engagement members may be disposed a distance of about 300mm-800mm from each other. There may be provided a stretcher having two or more attachment members adapted to engage such engagement members, thus the stretcher may be suspended at one end thereof via two such objects having detachably attachable engagement members and at the second end thereof via another suspension apparatus. The stretcher may be suspended between four objects. Thus an injured person may be transported in a suspended position, while in a horizontal position, between suspended objects (e.g. in a passageway), without decreasing seating space in a vehicle or exposing the person to danger of an explosion by being placed on the floor.

It will be understood that in accordance with all aspects above the one or more objects may be seats.

Yet a further aspect of the inventive feature including suspending an additional object via a first object is via the use of a holder or frame.

According to another aspect of the inventive feature, there is provided a suspension system adapted for at least partially suspending an object in a suspended position in a vehicle via at least one elongated suspension element, the suspension system comprising a suspended holder adapted for connection to at least one elongated suspension element and to be suspended thereby, the holder being further adapted for having an object detachably attached thereto and for holding the object in a suspended position.

The holder may be a single component. The holder may be made of two or more sub-components joined together. The holder may comprise at least one mounting element for mounting an object to the holder thereby. The mounting element may be adapted for fast-connection and/or fast release. In such case the mounting element, for example, may comprise one or more projections and the object may be adapted to be mounted on the projections. The at least one mounting element may comprise at least one locking element for ensuring that an object mounted on the holder is secured to the holder. In such case, the locking element may be adapted for fast-connection and/or fast release. In such case the mounting element may be formed with a bore and the locking element may be a pin adapted for insertion into the bore.

The holder may be of substantially planar shape. The holder may have a transverse dimension far greater than the thickness thereof. The holder may have a width of 20cm or less. The holder may have a linear section and a non-linear section extending from one end of the linear section. In such case the linear section and non-linear section may be shaped so as to have a seat-like shape and thereby be adapted to have a seat mounted thereon.

The holder may be made of a sheet of a rigid material.

The holder may comprise lower and upper portions and an intermediate portion therebetween. Each of the lower and upper portions may comprise connection elements and thus be adapted for connection to the at least one elongated suspension element thereby. The connection elements may be static connection elements.

The suspension system may further comprise the at least one elongated suspension element, via which the holder is to be suspended. The at least one elongated suspension element may be a plurality of elongated suspension elements. The at least one elongated suspension element may be any number of elongation suspension elements arranged to suspend the holder in any arrangement disclosed hereinabove or below.

The suspension system may further comprise the object to be suspended. The object may be free of connection elements adapted for connection to at least one elongated suspension element. In such case the object may be held in a suspended position completely via the holder. Alternatively, the object may be adapted for connection to at least one elongated suspension element, for partial suspension thereby. In such case the holder may only partially suspend the object. The object may be adapted to be mounted on the holder in a static manner. Such adaption may include the object comprising a strap for securing to the holder, or a mounting projection, or a recess adapted to receive a mounting projection, etc. The object may be a computer, a display, a gunner step, a stretcher, a seat, etc.

When the object is a seat: the seat may be a standard suspension seat, or may be adapted for suspension; the seat may comprise a seat portion and back portion integrally formed with each other; the seat may comprise a seat portion and back portion which are not integrally formed, in such case the back portion and/or holder may be adapted to allow the back portion to be mounted at different positions on the holder, and the seat portion and/or holder may be adapted for connection to each other; the seat portion and back portion may be attached to each other via a flexible and/or elastic strip connection member. The seat portion may comprise connection elements, adapted for connection to at least one elongated suspension element. The seat portion in any of the seats above may be adapted for connection to elongated suspension elements. The back portion and seat portion may comprise connection elements adapted for connection to at least one elongated suspension element.

It will be understood that any of the objects above may comprise elements adapted to mount or lock the object to the holder. Alternatively the mounting and/or locking elements may be comprised by the holder only, or both the object and holder may be adapted for connection to each other.

The suspension system may be configured to allow the holder to be positioned at different heights. This may be accomplished, for example, by shortening or lengthening the at least one elongated suspension element.

It would be understood that an object may be secured to the holder in any suitable manner, and that the holder may be formed with elements adapted to allow securing of objects thereto.

One advantage of using a holder as described above, may be that objects can be quickly suspended thereon and removed therefrom, since the object itself does not need to be connected to a vehicle, at least fully, by elongated suspension elements in a highly tensioned state.

Another advantage may be the reduced amount that an object for suspension needs to be modified for suspension. For example if the object is a conventional suspension seat, such seat may need to have industrial strength static connection elements welded to several portions thereof, each portion of such seat needing to be constructed to withstand the high forces exerted thereon by elongated suspension element in a highly tensioned state. Where a holder of the above-described type is used, the object may require substantially less modification, as it need only be adapted to be mounted on a holder. Or such seat may only require less connection elements than a conventional suspended object. The reduced need for modification of such seat for elongated suspension elements may allow a lighter and/or smaller seat to be used.

The holder may be shaped such that it functions as a part of a back portion of a seat. In such case the seat portion and back portion may be non-integral with each other. The back portion may have a reduced thickness, since at least a portion of the normal function thereof may be provided by the holder. Such seat may also have a compact folding position due to the reduced thickness of the back portion and/or reduction of material used to connect the back portion and seat portion.

### Arrangement of upper elongated suspension elements

According to another inventive feature, there is provided a vehicle comprising an upper surface, an object and a suspension apparatus for holding the object in a suspended position in the vehicle; the object having a first imaginary vertical reference plane symmetrically dividing it into two halves and a second imaginary vertical reference plane perpendicular to the first plane; the suspension apparatus comprising two pairs of elongated suspension elements each comprising first end and second ends and an intermediate portion extending therebetween, and being adapted to anchor the object to the upper surface of the vehicle; the first ends of each pair of elongated suspension elements engaging an object connection point disposed on the object, the object connection points of the two pairs being disposed at different sides of the first plane; each pair having a second end of one of the elongated suspension elements engaging a first vehicle connection point disposed on the upper surface of the vehicle, and a second end of the other elongated suspension element engaging a second vehicle connection point disposed on the upper surface of the vehicle, the first and second vehicle connection points being disposed at different sides of the second plane; the first vehicle connection points of the two pairs being disposed closer to each other than the second vehicle connection points of the two pairs.

One of the advantages of the above arrangement may be that during an explosion underneath the vehicle the object is significantly prevented from undesired twisting.

The first vehicle connection points may be separated by a distance of between 100-200mm. Such distance may be advantageous in that it is not so small as to cause the first vehicle connection points to behave during an explosion as a single pivot point.

The second vehicle connection points may be, in the plan view of the object and upper surface of the vehicle, spaced further from each other than the spacing of the outer peripheral edges of the object disposed along a third imaginary vertical reference plane parallel with the second imaginary vertical reference plane. In such view, both of the second vehicle connection points may be spaced from the object such that they are not disposed thereabove. Such of the second vehicle connection points may be advantageous in that it does not leave elements above a head of a person sitting in the object, which may be impacted during an explosion under the vehicle.

In a side view of the object, each of the first, second, third and fourth upper elongated suspension elements may forms an angle of at least 10 degrees from a vertical axis passing through the respective point on the upper portion to which the elongated suspension element is connected.

Such angle may provide additional stability to the suspension system.

The object connection points may be disposed at corners of the object.

### Dynamic connection element

In accordance with a first aspect of another inventive feature, there is provided a vehicle comprising inner surfaces, an object, and a suspension apparatus for holding the object in a suspended position in the vehicle; the suspension apparatus comprising a dynamic connection element mounted on one of said inner surfaces of the vehicle, a first static connection element mounted on one of said inner surfaces of the vehicle, a second static connection element mounted on the object, and an elongated suspension element adapted to hold the object in the suspended position; the elongated suspension element comprising first and second ends and an intermediate portion extending therebetween; the elongated suspension element engaging the dynamic connection element via the intermediate portion thereof, and engaging the first and second static connection elements via the first and second ends thereof.

The use of a dynamic connection element may be advantageous in situations where the object is suspended close to a side surface or upper surface of a vehicle. If a vehicle uses a suspension apparatus with a short upper elongation element, when an explosion occurs under the vehicle there may be a violently acceleration upwards of the upper and side surfaces of the vehicle, together with the short elongated suspension element connected to an object. Consequently the short elongated suspension behaves in a manner similar to a rigid element and violently jerks the object upwards transferring all of the force of the explosion to the object. It has been found that a longer elongated member stretches more during an explosion (high forces of an explosion even causing stretching of high strength elongated elements). Additionally it has been found that by creating a non-linear path of the upper elongated element, shock waves may be somewhat dissipated by diversion of their path. Thus, use of a dynamic connection element having a minimum predetermined length to allow stretching thereof during sudden tensioning thereof by an explosion, allows a longer elongated element to be used, even when an object to which the elongated object is attached is disposed in close proximity to a wall, and an optimal angle for static connection of the elongated element to the side wall for a desired suspension position would have necessitated a shorter elongated element. Elongated suspension elements of greater than 80 mm have been found to stretch in a suitable manner.

The elongated suspension element may be greater than 80 mm.

Using the dynamic connection element, the optimal angle may be achieved while utilizing a long elongated element along a non-linear path.

The first and second static connection elements and the dynamic connection elements may be disposed in a non-linear path.

The dynamic connection element may be secured to a side surface of a vehicle. The dynamic connection element may be proximate to the upper surface.

In accordance with another aspect of the inventive feature, there is provided a vehicle comprising inner surfaces, an object and a suspension apparatus; the suspension apparatus comprising at least one elongated suspension element adapted to hold the object in the suspended position, a tensioning strap, a tensioning mechanism engaging the tensioning strap, and a dynamic connection element mounted on one of said inner surfaces of the vehicle; the tensioning strap comprising first and second ends and an intermediate portion extending therebetween; the tensioning mechanism being mounted on the object or on one of the inner surfaces; the intermediate portion of the tensioning strap engaging the dynamic connection element in a manner that allows the intermediate portion to move relative to the dynamic connection element, when the tensioning mechanism is operated.

The suspension apparatus may comprise a single tensioning strap or a single tensioning mechanism.

The tensioning strap may have one free end, i.e. an end which is not connected to the object or vehicle.

The inner surface upon which the dynamic connection element may be mounted may be a floor of the vehicle. The tensioning mechanism may be mounted on a side surface of the vehicle.

Some of the advantages of using a dynamic connection element may be that:
- it allows the object to be moved towards a portion of an inner surface of the vehicle which does not have sufficient area for a tensioning mechanism to be mounted on and/or operated thereat; and
- the tensioning strap may be directed to the tensioning mechanism along a path that will not hinder operation of the tensioning mechanism (such path may form an angle with the tensioning mechanism of about 170-180 degrees).

The dynamic connection element may be mounted on the same inner surface of the vehicle as the tensioning mechanism. In such case the intermediate portion of the tensioning strap may engage the dynamic connection element in a manner that allows the intermediate portion thereof to move relative to the dynamic connection element when the tensioning strap is not taut, and a portion of the tensioning strap which extends between the tensioning mechanism and the dynamic connection element may be substantially parallel with the inner surface upon which both are mounted, when the tensioning strap is taut, allowing easy release of the tensioning strap when the tensioning mechanism is operated.

The suspension system may be free of dynamic connection elements on the object. The suspension system may be free of one or more dynamic connection elements on the upper surface of the vehicle. The suspension system may be free of elongated suspension elements which engage a dynamic connection element.

### Suspension system with a single tensioning strap and a single tensioning mechanism

Still a further inventive feature, provides for a vehicle comprising inner surfaces, an object and a suspension apparatus for holding the object in a suspended position in the vehicle; the suspension apparatus comprising a single tensioning strap, a single tensioning mechanism engaging the tensioning strap, and at least one elongated suspension element adapted to hold the object in the suspended position; the tensioning strap having a first end, a second end and a intermediate portion extending therebetween; one of the first end of the tensioning strap and tensioning mechanism being secured to the object and the other one being secured to one of the inner surfaces of the vehicle; and when the tensioning mechanism is operated, thereby causing the tensioning strap to become taut, the object is moved in a desired direction causing the at least one elongated suspension element to become taut and suspend the object in the suspended position.

It will be appreciated, that since the at least one elongated suspension element is adapted to hold the object in the suspended position, the tensioning strap may be less strong than the at least one elongated suspension element as it is not designed to bear the load of the object and a user that may be seated thereon.

The suspension apparatus may be free of an additional tensioning mechanism.

A spatial arrangement of the suspension apparatus may be that, when the object in the suspended position and the tensioning strap is taut, the tensioning strap is slanted in a direction transverse the slanting direction of portions of the at least one elongated suspension element connected between the object and lower surface of the vehicle. The tensioning strap may be slanted in a direction similar to the slanting direction of portions of the at least one elongated suspension element connected between the object and upper surface of the vehicle.

The object may further comprise upper portion and lower portions, and being symmetrically divided into two halves by an imaginary vertical reference plane. The rear edge being more proximate than the front edge to the upper portion. In such case the tensioning mechanism may be mounted on the object on the upper portion and/or the lower portion, at a point of intersection of the first and second halves thereof. The tensioning mechanism may be mounted on: the upper portion at a point thereon within the lowest third of the upper portion, in a rear view of the object; a bottom surface of the lower portion.

### Seat portion supported by a rigid support member

A further inventive feature provides a suspension system comprising a suspension seat and a suspension apparatus adapted to hold the seat in a suspended position; the suspension seat comprising a back portion, a rigid seat portion, and a rigid support member; the suspension apparatus comprising at least one elongated suspension element; the rigid support member having first and second ends and an intermediate portion extending therebetween; the first end of the rigid support member and the rigid seat portion are adapted for static connection with each other at a seat point spaced from the at least one elongated suspension element; the second end of the rigid support member and the at least one elongated suspension element are adapted for static connection with each other at an element point spaced from the seat portion.

An advantage of the suspension system above may be that it allows use of a rigid structural member, without the disadvantage of compressive forces being transferred from a surface of a vehicle, during an explosion. Such disadvantage may not occur, since the rigid structural member itself may be suspended via the suspension apparatus and may be distanced from surfaces of the vehicle.

The suspension seat and suspension apparatus may be free of supporting means extending from the rigid seat portion at a point thereon spaced from the elongated suspension element to a point on either a back portion of the suspension seat or the suspension apparatus at a point disposed higher than the seat portion.

The rigid seat portion may comprise first and second peripheral edges extending between rear and front edges thereof. A maximum magnitude of length between proximate points on the first and second peripheral edges may be less than 450 mm. The maximum magnitude of length may be between 400 mm to 430 mm.

Some of the advantages of such suspension system may be that: the absence of side straps may ease use of the seat, as equipment worn will not become entangled with such straps; since no side straps extending from a portion of the at least one elongated suspension element above the rigid seat portion are needed to support the seat portion, a seat having a small width may be provided, than was previously needed for users wearing equipment on their belts, allowing more space in the vehicle.

The intermediate portion of the rigid support member may be of a length adapted to support the seat point in a substantially horizontal orientation.

The first end of the rigid support member may be adapted for detachably attachable engagement with the rigid seat portion.

The second end of the rigid support member may be adapted for detachably attachable engagement with the elongated suspension element.

The suspension seat may further comprise a back portion. The back portion may be made of a textile material. The suspension seat may further comprise a biasing mechanism adapted to pivot the seat portion upwardly about a merging area of the seat portion and back portion, when the rigid support member is detached from the seat portion and elongated suspension element. The back portion may be transparent.

The element point may be spaced at least 20 mm from an end of the elongated suspension element or, where a vehicle comprising such suspension system is provided with the suspension system, 20 mm from any rigid element directly connected to the lower surface of the vehicle or the lower surface of the vehicle. The spacing for either case may also be a distance of at least 80 mm.

The at least one elongated suspension element may be formed with a plurality of recesses adapted for engagement with the second end of the rigid support member. The at least one elongated suspension element may further comprise at least three adjacent bulging portions made of textile material, and a plurality of recesses formed between the bulging portions; the recesses being adapted for the engagement with the second end of the rigid support member.

The rigid seat portion may further comprise top and bottom surfaces, the bottom surface being formed with a plurality of recesses adapted for the engagement with the first end of the rigid support member.

### Suspended Objects

It will be understood that each so-called "object" mentioned above may be suspended in an advantageous way. Thus the object may be constituted by alternative items, depending on the need therefor in a vehicle:
- a suspension seat, in which case the lower portion of the object may be a seat portion, and the upper portion of the object may be a back portion;
- a holder, in which case the holder may be adapted for detachably-attachable mounting of an item thereon, and may be adapted to suspend an item spaced from the lower and upper surfaces of the vehicle. In such case the holder may have a lower portion and an upper portion. Each of the lower and upper portions being made of a light, rigid and thin material; and
- part of an assembly comprising an additional suspended object and a platform held in a suspended position by both the object and the additional object.

One of the advantages of using a holder or a platform, is that they may be adapted to hold different elements. For example, off-the-shelf seats manufactured for applications other than suspension may be mounted on such holder or platform. Thus light, cheap seats, not comprising metal brackets and industrial strength parts for holding the brackets may be used. Additionally, the holder or platform allows a user to choose the most efficient use for space in a vehicle, by selecting such to support a seat or to be used as storage space.

### General

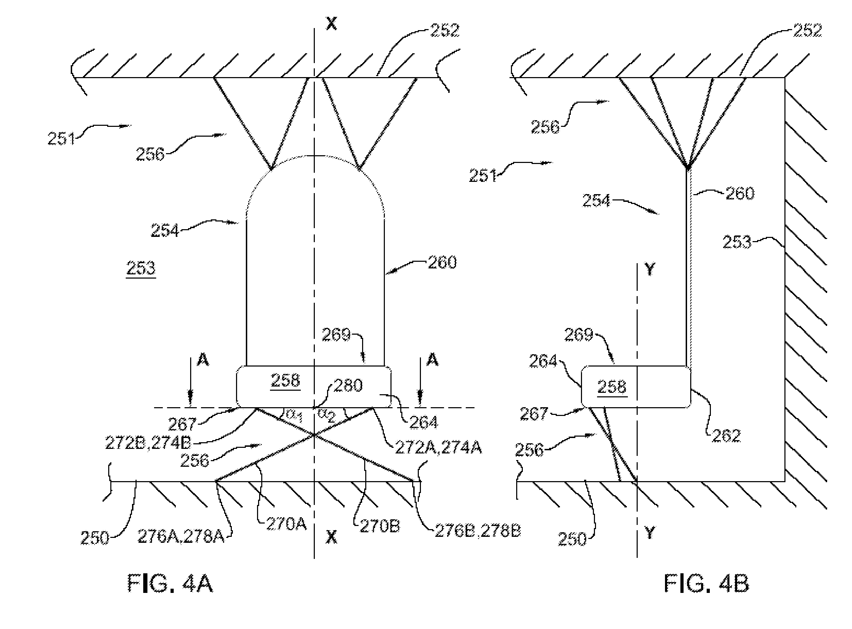

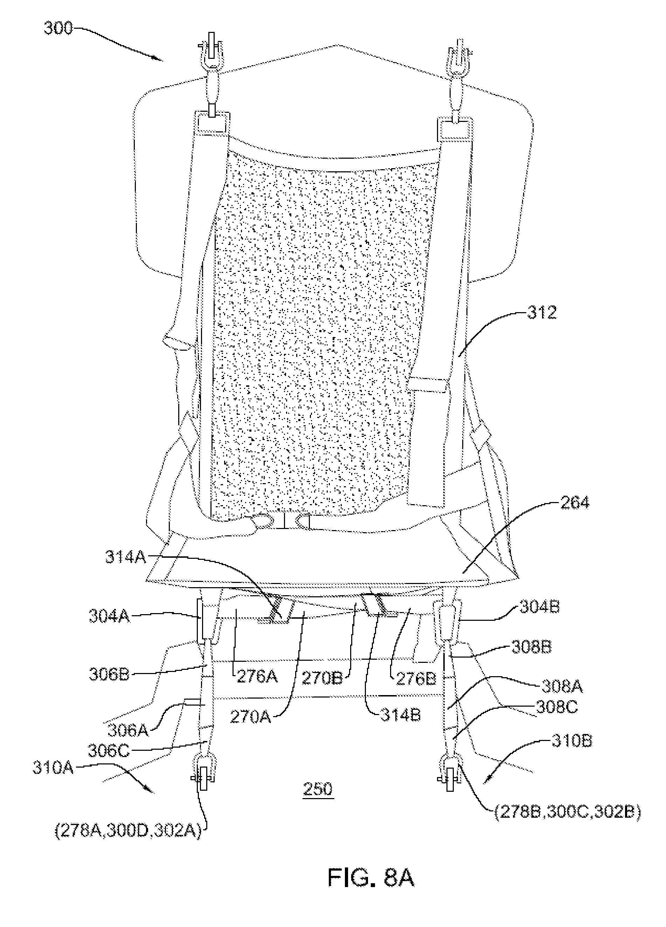

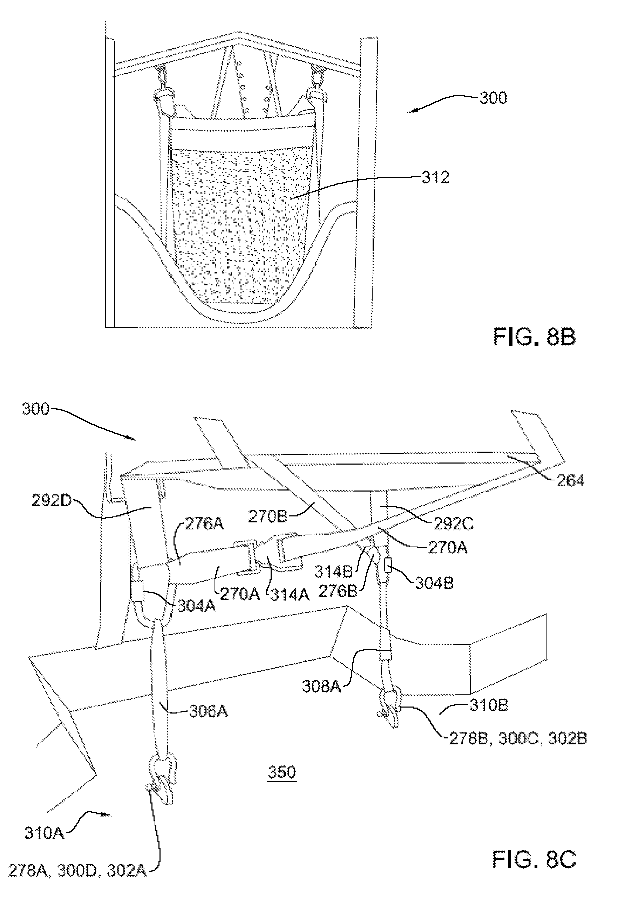

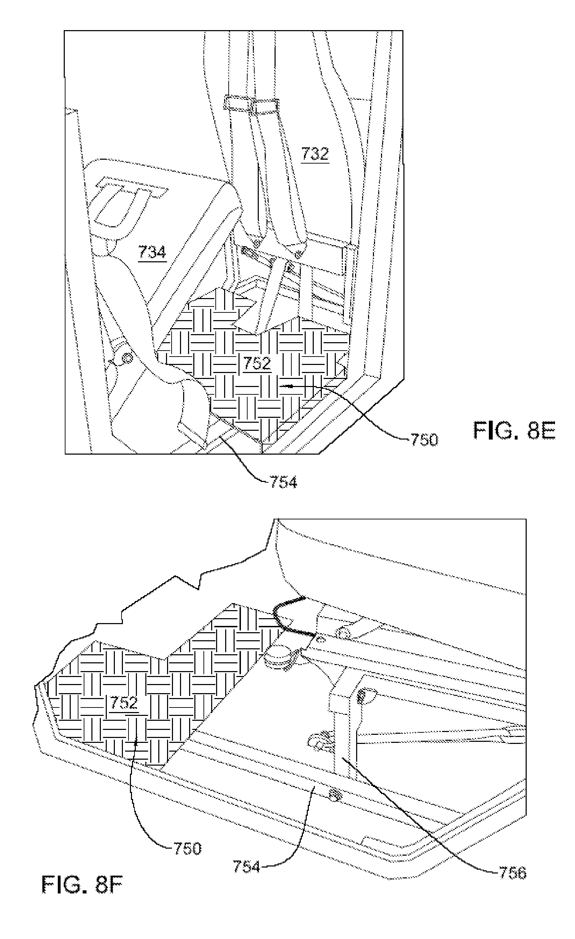

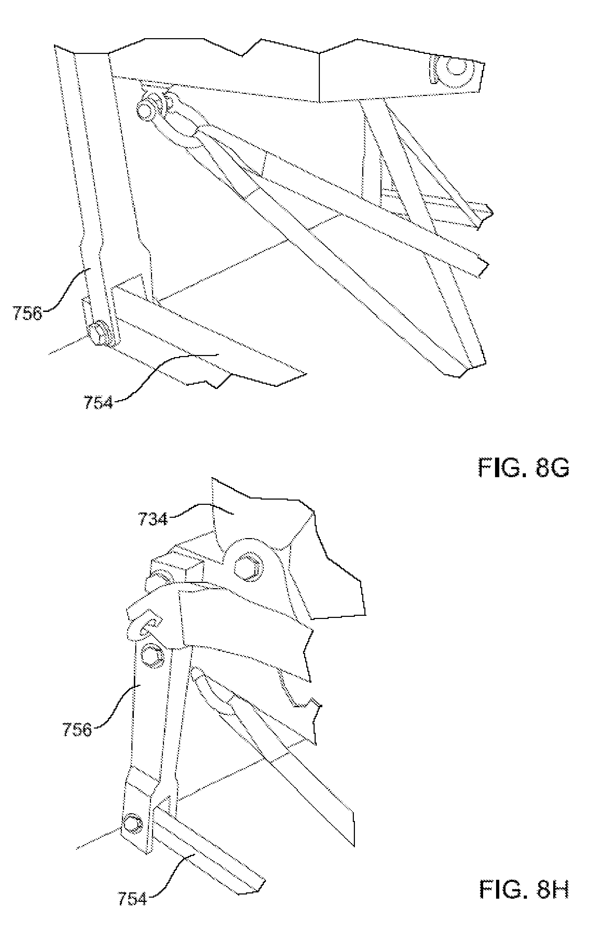

In accordance with any of the inventive features above:
- a suspension system may be free of any rigid elongated elements connected between one of the inner surfaces of the vehicle and the object;
- a vehicle may comprise a wall adjacent the object and the upper portion may be closer to the wall than the front edge of the lower portion;
- a tensioning mechanism may be a manually operated ratchet mechanism
- each inventive feature may be associated with an object having an upper portion, a lower portion, and a rigid base connecting and holding the two portions;
- a portion of a rigid base adjacent a lower portion of an object may be considered to be a part of the lower portion, and, likewise, a portion of a rigid base adjacent an upper portion of an object may be considered to be a part of the upper portion; the tensioning mechanism may also be mounted on such base;
- in all inventive features that comprise a suspension apparatus, the suspension apparatus may be comprised completely of elongated suspension elements and therefore be free of rigid elongated suspension elements;
- in all places that it is indicated that a suspension apparatus comprises at least one elongated suspension element, the suspension apparatus may comprise one or more elongated suspension elements, and each object, objects or portions thereof to be suspended by the at least one elongated suspension element may be suspended by different such suspension elements or by different portions of one such suspension element;
- it will be understood that while certain inventive aspects above are provided above as one of a suspension system or as a vehicle, they may also be provided as the other;
- where a "front view" of a seat is indicated in the specification or claims, the view referred to is that shown, for example, in Figs. 4A and 8A;
- where a "plan view" is indicated in the specification or claims, it should be understood as a method to clarify a position of a specific element, therefore elements which in real life would obscure the location of the specific element may be considered transparent where necessary (for example in a plan view of a suspension seat a point under the seat may not be visible, if needed the seat may be considered transparent in order to understand the location of the element);
- all seats described may comprise a rigid seat portion and/or a rigid back portion and/or be adapted to pivot about a merging section of a seat portion and back portion; all seat portions may be slightly upwardly inclined.

It will be understood that even though the claims of the present application do not include all inventive features above, such inventive features are not disclaimed and the applicant reserves the right to file divisional and/or continuation applications therefor.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1A** is a schematic side view of a vehicle and suspension seat suspended therein via a suspension apparatus;
**Fig. 1B** is a schematic plan view of the vehicle and the suspension seat in Fig. 1A along line A-A, additionally showing a plurality of seats in the vehicle;
**Fig. 2A** is a schematic front perspective view of the suspension seat in Figs. 1A and 1B, in a deployed state;
**Fig. 2B** is a schematic side perspective view of the suspension seat in Figs. 1A, 1B and 2A, in an undeployed state;
**Fig. 3** is a schematic plan view of a vehicle and suspension seat with users seated thereon;
**Fig. 4A** is a schematic front view of a suspension system;
**Fig. 4B** is a schematic side view of the suspension system in Fig. 4A;
**Fig. 4C** is a schematic plan view of the suspension system in Figs. 4A and 4B and a lower surface of a vehicle;
**Fig. 5A** is a schematic side view of another suspension system and lower surface of a vehicle;
**Fig. 5B** is a schematic plan view of the suspension seat shown in Fig. 5A;
**Figs. 6A to 6G** are schematic plan views of suspension seats and suspension apparatuses and lower surfaces of vehicles;
**Figs. 7A to 7F** are schematic side views of a portion of different suspension systems including lower portions and suspension elements joining the lower portions to lower surfaces;
**Fig. 8A** is a schematic front view of a suspension system;
**Fig. 8B** is a schematic partial rear view of the suspension system in Fig. 8A;
**Fig. 8C** is a schematic partial lower view of the suspension system in Figs. 8A and 8B;
**Fig. 8D** is a schematic side view of a suspension system;
**Fig. 8E** is a schematic partial rear view of the suspension system in Fig. 8D;
**Fig. 8F** is a schematic partial side view of the suspension system in Figs. 8D and 8E;
**Fig. 8G** is a schematic partial side view of the suspension system in Figs 8D-8F;
**Fig. 8H** is a schematic partial side view of the suspension system in Figs 8D-8G;
**Fig. 9A** is a schematic partial front view of a suspension system, side and upper surfaces of a vehicle;
**Fig. 9B** is a schematic side view of the suspension system and upper surface shown in Fig. 9A;
**Fig. 9C** is a schematic plan view of the suspension system shown in Figs. 9A and 9B;
**Fig. 10A** is a perspective view of connection elements connected to side and upper surfaces of a vehicle;
**Figs. 10B** is a perspective view of the connection elements and vehicle in Fig. 10A, with additional elongated suspension elements shown;
**Fig. 11A** is a schematic side view of a suspension system including a suspension seat and suspension apparatus;
**Fig. 11B** is a schematic side view of the suspension system in Fig. 11A, with the suspension seat in a different position;
**Figs. 11C to 11H** are schematic side views of different suspension systems;
**Fig. 11I to Fig. 11L** are schematic views of connection elements and a tensioning mechanism mounted on a surface of a vehicle;
**Fig. 11M** is a schematic plan view of an object;
**Fig. 11N** is a schematic rear view of the object in Fig. 11M;
**Fig. 11O** is a schematic upward view of the object in Figs. 11M and 11N;
**Fig. 12A** is a schematic front view of a suspension system;
**Fig 12B** is a plan perspective view of an engagement member and an attachment member secured thereto in a secured position;
**Fig. 12C** is a plan perspective view of the detachment member and engagement member shown in Fig. 12B in an unsecured position;
**Fig. 12D** is a plan perspective view of the engagement member in Figs. 12B and 12C;
**Fig. 12E** is a schematic plan view of a suspension system in a vehicle;
**Fig 12F** is a schematic side view of the suspension system in Fig. 12E, with an object suspended by the suspension system in a fully pivoted position;
**Fig 12G** is a schematic side view of the suspension system in Figs. 12E and 12F, with the object suspended by the suspension system in a partially pivoted position;
**Fig. 12H** is a schematic plan view of four suspended objects and an object suspended thereby;
**Fig. 13A** is a schematic side view of a suspension system;
**Fig. 13B** is a schematic front view of the suspension system in Fig. 13A;
**Fig. 13C** is a schematic side view of another suspension system comprising a seat mounted thereon and suspended thereby;
**Fig. 13D-13F** are schematic side views of different suspension systems;
**Fig. 14A** is a schematic side view of a suspension system;
**Fig. 14B** is a schematic front view of the suspension system in Fig. 14A;
**Fig. 14C** is a schematic side view of the suspension system is Figs. 14A and 14B in a retracted position; and
**Fig. 14D** is a schematic side view of another suspension system.

### DETAILED DESCRIPTION OF EMBODIMENTS

Examples of vehicles, suspension systems, suspension apparatus' and objects to be suspended, storage units, and as methods of use thereof, will now be described. However, it will be appreciated that, in the forthcoming examples, where two or more inventive features are exemplified in a single example, the particular combination of the two or more inventive features is not intended to be limited, and each inventive feature should be considered independent of each other and capable of use in combination with other inventive features described herein.

It should be noted that drawings of the present application are schematic and therefore may not show connection or intermediate connection elements, however any such omission does not deny the presence of such elements.

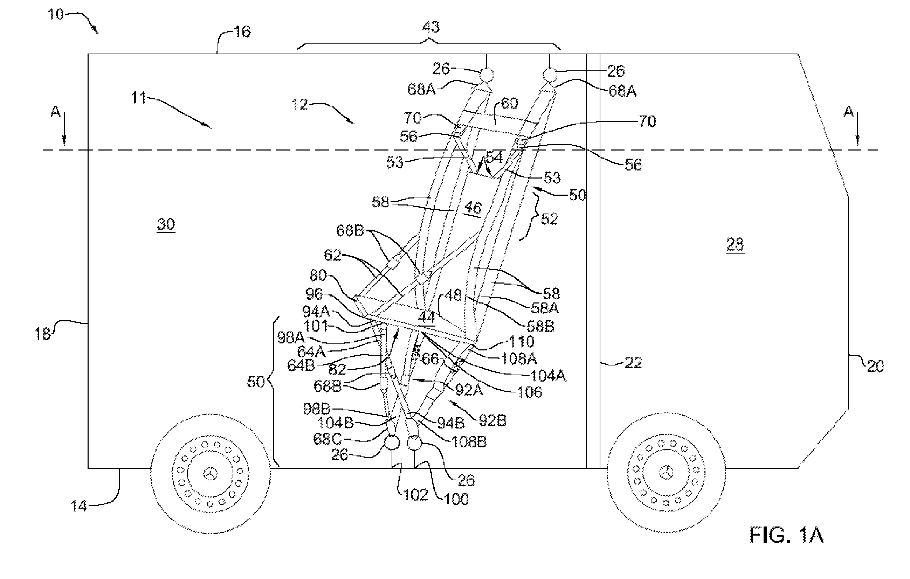

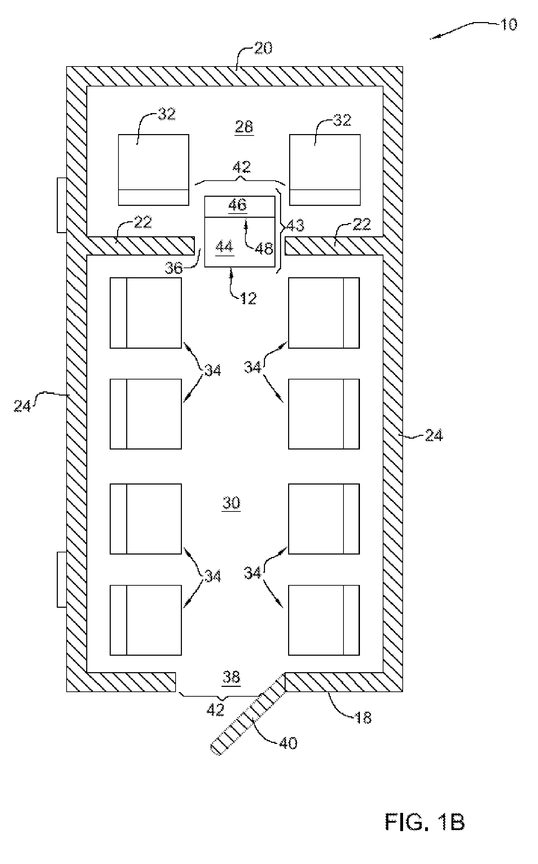

Referring now to the drawings wherein like reference characters designate like or corresponding parts throughout several views, there is shown in Figs. 1A and 1B, a vehicle generally designated by the numeral 10, such as an armored personnel carrier, and a suspension system 11 comprising a suspension seat, generally designated by the numeral 12, and suspension apparatus, generally designated as 50, for suspending the suspension seat 12 in the vehicle 10.

The vehicle 10 comprises a lower surface 14 (Fig. 1A), an upper surface 16 (Fig. 1A), a rear wall 18, a front wall 20, a separation wall 22, two side walls 24 (Fig. 1B).

The suspension apparatus comprises an anchoring arrangement having a plurality of brackets 26 (Fig. 1A).

The vehicle 10 further comprises a first area 28 constituted by a drivers cabin and a second area 30 constituted by a passengers cabin. The drivers cabin 28 is defined between the front wall 20, separation wall 22 and two side walls 24, and comprises two driver seats 32. The passengers cabin 30 is defined between the front wall 20, an internal partition or separation wall 22, two side walls 24 and the rear wall 18. The passengers cabin 30 comprises a plurality of passenger seats 34.

The separation wall 22 is formed with an opening 36 for accessing the drivers cabin 28 from the passengers cabin 30 and vice versa.

The rear wall 18 is formed with an entrance/exit 38 (hereinafter to be referred to merely as the "exit") for accessing and exiting the vehicle 10. The rear wall 18 comprises a door 40 attached thereto.

As best seen in Fig. 1B, temporarily ignoring the suspension seat 12, the passengers cabin 30 comprises a passageway 42 defined between the opening 36 in the separation wall 22, the passengers seats 34 and the exit 38.

As can be understood from both Figs. 1A and 1B, the brackets 26 engages the lower and upper surfaces of the vehicle (14,16), respectively below and above a portion 43 of the passageway 42. Consequently the suspension seat 12 is disposed in the portion 43 of the passageway 42, and, in this example, is adjacent to the opening 36 formed in the separation wall 22.

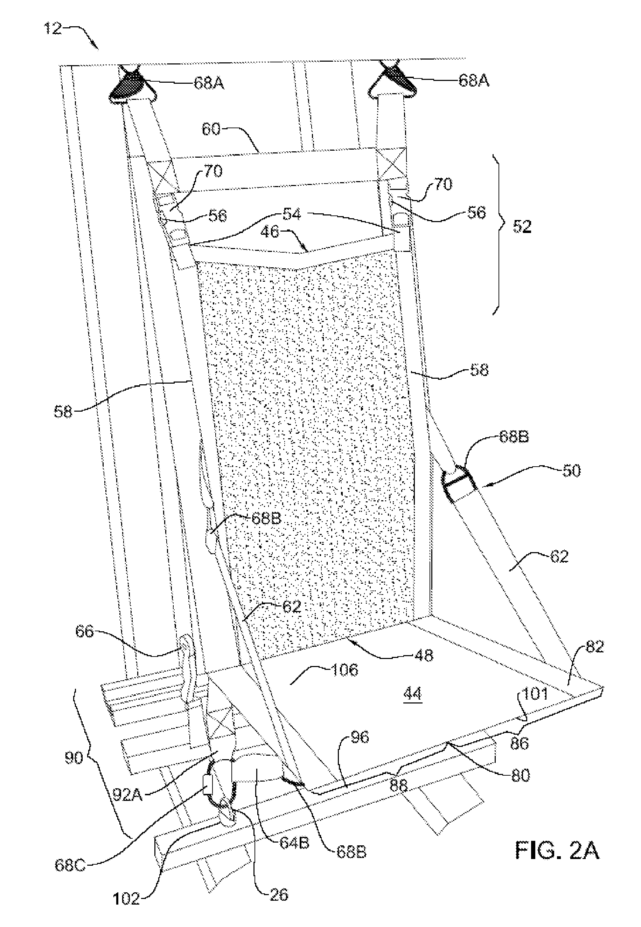

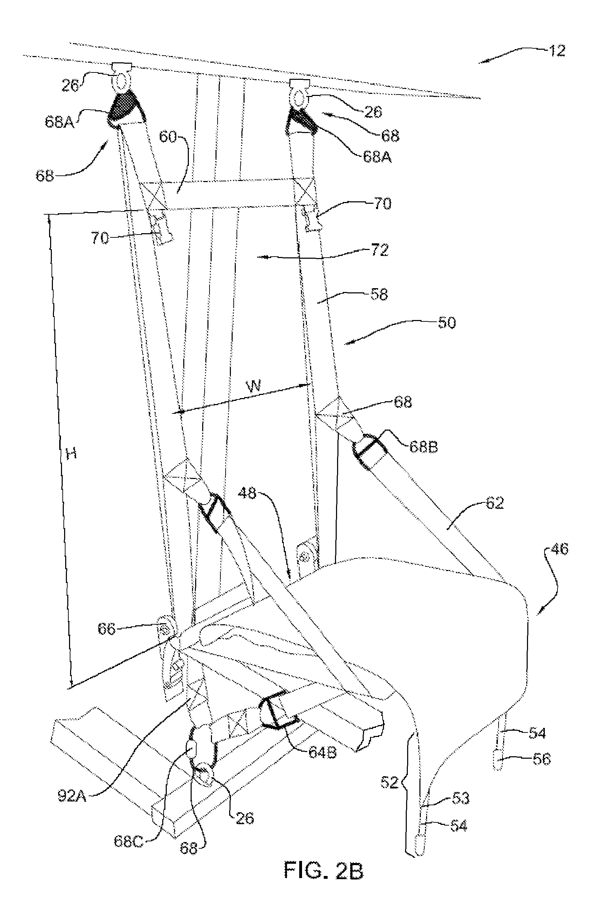

Referring also to Figs. 2A and 2B, the suspension seat 12 comprises a seat portion 44, a back portion 46 integrally and pivotally joined to the seat portion 44 along a merging line 48 thereof. The seat portion 44 is shown in all figures in a substantially horizontal orientation. Notably, the seat portion 44 is slightly slanted in a manner known for suspension seats, for comfort of a user seated thereon. The seat portion comprises a front edge 80, and first and second halves (86, 88) extending from the front edge 80 to the merging line 48.

The back portion 46 is shown in Figs. 1A, 1B and 2A in a substantially vertical orientation. The back portion 46 is made of fabric material and comprises a upper part 52 having two corners 54 and two fastener elements 56 (best seen in Fig. 2B), each in the form of a tongue connector portion of a buckle, attached to each corner 54 via a strap 53 extending from each corner 54.

The suspension apparatus 50 comprises two spaced apart and substantially vertical elongated suspension elements 58, a horizontal stabilizing element 60 attached to both of the vertical elongated suspension elements 58 at portions thereof adjacent to the upper surface 16 of the vehicle 10, upper side-support straps 62, a tensioning element 66, constituted by a ratchet, mounted on each of the vertical elongated suspension elements 58, and a plurality of intermediate connection elements 68.

The intermediate connection elements 68 include automatic carabiners 68A (sold under the trade name "Camp 782"), flight hooks 68B (sold under the trade name "CS-1125"), and D-shaped screw gate carabiners 68C (sold under the trade name "N-432"). It should be noted that each of the vertical elongated suspension elements 58 loops through carabiners 68A and thus has one linear vertical portion 58A (best seen in Fig. 1A) and a second curved portion 58B (best seen in Fig. 1A). The slight curvature of portion 58B is due to the connection with the upper side-support straps 62.

The suspension apparatus 50 comprises a first front elongated suspension element 64A (Fig. 1A), a second front elongated suspension element 64B, a first rear elongated suspension element 92A and a second rear elongated suspension element 92B (Fig. 1A). Notably, the first and second front elongated suspension elements (64A, 64B) are connected to screw gate carabiners 68C. The first front elongated suspension element 64A is connected at a first end thereof 94A (Fig. 1A) to a bottom surface 82 of the seat portion 44 at a point 96 (Fig. 2A) thereof on the second side 88 thereof. The first front elongated suspension element 64A is connected at a second end thereof 94B (Fig. 1A) to a point 100 (Fig. 1A) under the first side 86 of the seat portion 44, via the connection element 68C and bracket 26. The second front elongated suspension element 64B is connected at a first end thereof 98A (Fig. 1A) to the bottom surface 82 of the seat portion 44 at a point 101 (Fig. 2A) thereof on the first side 86 thereof. The second front elongated suspension element 64B is connected at a second end thereof 98B to a point 102 under the second side 88, via the connection element 68C and bracket 26. The first rear elongated suspension element 92A is connected at a first end thereof 104A (Fig. 1A) to the bottom surface 82 of the seat portion 44 at a point 106 thereof on the second side 88 thereof, and a second end thereof 104B to the point 102. Referring now to Fig. 1A, the second rear elongated suspension element 92B is connected at a first end thereof 108A to the bottom surface 82 of the seat portion 44 at a point 110 thereof in the on the first side 86 thereof, and a second end thereof 108B to the point 100, via the connection element 68C and bracket 26. The rear elongated suspension element 92A is a continuation of the vertical elongated suspension element 58, as is the rear elongated suspension element 92B.

The vertical elongated suspension elements 58 comprises fastener elements 70 in the form of buckle receivers for snapping engagement with the fastener element 56 of the back portion 46. The buckle receivers 70 are disposed more proximate to the upper surface 16 than the lower surface of the vehicle 14, when the suspension seat is suspended in the vehicle.

In this example the elongated suspension elements (58, 64) are all in the form of high strength elongated suspension elements, which are bendable, and have a minimum tear strength of about 5000 kg, and low elasticity properties.

Referring to Fig. 2B, the tongue connectors 56 are shown disconnected from the buckle receivers 70, and the back portion 46 is draped over the seat portion 44 which remains in a substantially horizontal orientation. In this figure a back-support region generally designated as 72 of the suspension apparatus 50 is seen. The back-support region 72 in this example is constituted by an area defined between portions of the vertical elongated suspension elements 58, located above the seat portion 44 and the horizontal stabilizing element 60. The vertical elongated suspension elements are spaced from each other a distance W, which in this example is about 50 centimeters. The horizontal stabilizing element 60 is disposed a height H above the seat portion, which in this example is about 80cm. Thus the back-support region 72 in this example has a roughly rectangular area of HW. The horizontal dimension of the back-support region 72, which is parallel to the plane of the seat, is about 50 centimeters, and the vertical dimension of the back-support region 72, which is perpendicular to the plane of the seat, is about 80 centimeters.

It should however be noted that if the suspension seat 12, did not comprise the horizontal stabilizing element 60, the back-support region 72 would be constituted by the area between the vertical elongated suspension elements 58, extending from the seat portion 44 until the upper surface 16. It should also be noted that the back-support region need not necessarily be rectangular. However, the back-support region should be a sufficiently large enough area to enable a person to traverse therethrough.

In operation, the suspension seat 12 is suspended in the portion 43 of the passageway 42 with the back portion 46 in a deployed state (as seen in Figs. 1A and 2A), thereby preventing passage through the portion 43 of the passageway 42.

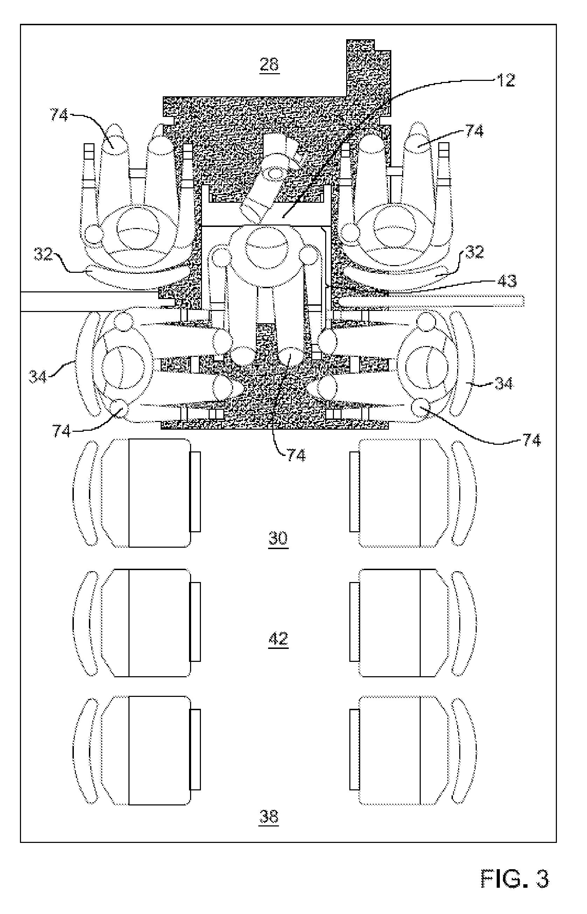

In Fig. 3, a suspension seat 12, driver seats 32 and passenger seats 34, are shown occupied by users 74, illustrating how use of the suspension seat blocks users 74 from traversing from a drivers cabin 28 to a passengers cabin 30 and vice-versa.

If the users 74 seated in the driver's cabin 28 need to exit the vehicle 10 via the exit 38, this may be accomplished by bringing the suspension seat 10 to an undeployed state (as seen in Fig. 2B) by detaching the tongue connectors 56 from the buckle receivers 70, and draping the back portion 46 over the seat portion 44, whereby the back portion 46 no longer prevents passage through the back-support region 72 and hence the portion 43 of the passageway 42. Thereafter the users 74 may move through the back-support region 72 and traverse the vehicle 10 via the passageway 42 and the exit 38. Notably this allows the portion 43 of the passageway 42 to be bypassed while the suspension seat 12 is still suspended.

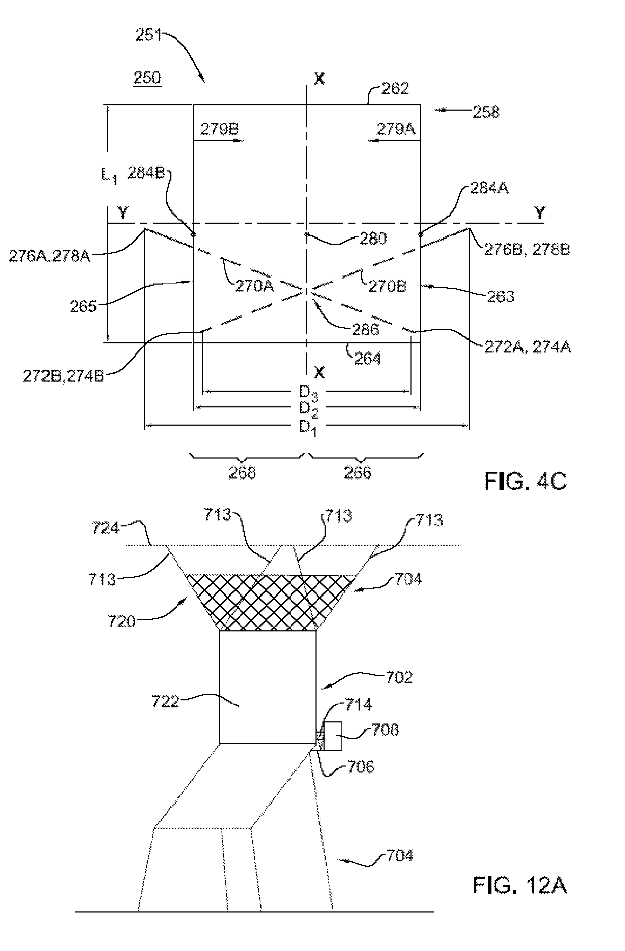

Referring to Figs. 4A, 4B and 4C, there is illustrated a vehicle (only an internal portion of which is seen) having inner surfaces including lower and upper surfaces (250, 252) and a side wall 253. The vehicle comprises a suspension system, generally designated as 251. The suspension system 251 comprises a suspension seat, generally designated as 254, and a suspension apparatus, generally designated as 256, for holding the suspension seat 254 in a suspended position in the vehicle.

The suspension seat 254 comprises a seat portion 258 and a back portion 260. The seat portion 258 comprises opposite rear and front edges (262, 264), with the rear edge 262 being the closer edge to the back portion 260. The seat portion 258 further comprises adjacent first and second halves (266, 268) extending between the rear and front edges (262, 264), first and second peripheral edges (263, 265) extending between the rear and front edges, and bottom and top surfaces (267, 269, see Figs. 4A and 4B). For ease of explanation, Figs. 4A and 4C are illustrated with an imaginary first vertical plane X, bisecting the seat portion 258 along a merging portion of the first and second halves (266, 268), and Figs. 4B and 4C are illustrated with an imaginary second vertical plane Y, bisecting the seat portion 258 between the rear and front edges (262, 264). Thus the first half 266 is constituted by the part of the seat portion 258 bounded by rear and front edges (262, 264), the first peripheral edge 263, the first vertical plane X, and the bottom and top surfaces (267, 269), and the second half 266 is constituted by the part of the seat portion 258 bounded by rear and front edges (262, 264), the second peripheral edge 265, the first vertical plane X, and the bottom and top surfaces (267, 269).

The suspension apparatus 256 is adapted to anchor the back portion 260 to the upper surface 252 of the vehicle, and comprises first and second lower elongated suspension elements (270A, 270B) adapted to anchor the seat portion 258 to the lower surface 250 of the vehicle. The first lower elongated suspension element 270A comprises a first end 272A connected to a first point 274A on the bottom surface 267 (as seen in Figs. 4A and 4B) of the seat portion 258, in a corner of the first half 266 adjacent the front edge 264 and the first peripheral edge 263 of the seat portion 258. The first lower elongated suspension element 270A further comprises a second end 276A connected to a first point 278A on the lower surface 250 (as seen in Figs. 4A and 4B) closer to the second half 268 of the seat portion 258 than the first half 266 thereof. As can be seen in Fig. 4C, the first point 278A on the lower surface 250 is spaced from the second peripheral edge 265 in a direction, indicated by arrow 279A, away from the first peripheral edge 263. The second lower elongated suspension element 270B comprises a first end 272B connected to a second point 274B on the bottom surface 267 (as seen in Figs. 4A and 4B) of the seat portion 258, in a corner of the second half 268 adjacent the front edge 264 and the second peripheral edge 265 of the seat portion 258. The second lower elongated suspension element 270B further comprises a second end 276B connected to a second point 278B on the lower surface 250 closer to the first half 266 of the seat portion 258 than the second half 268 thereof. As can be seen in Fig. 4C, the second point 278B on the lower surface 250 is spaced from the first peripheral edge 263 in a direction, indicated by arrow 279B, away from the first peripheral edge 263.

Notably, Figs. 4A, 4B and 4C, illustrate the suspension seat 254 in a suspended position, which is held static by the suspension apparatus 256 and therefore can be sat on by a user with little or no movement of the suspension seat 254, and the first and second lower elongated suspension elements (270A, 270B) are taut.

It should be mentioned that when it is stated that one of the halves of the seat portion is "closer" than the other half to a point on the floor, such should be understood to mean that the closer half of the seat portion is the one which has a point thereon which is spaced from the point on the floor a smaller distance than every point on the other half of the seat portion. To elaborate, in the present example the closest point on the first half 266 to first point 278A on the lower surface 250, is the point designated as 280 which is disposed at the intersection of the bottom surface 267 of the seat portion, the vertical plane X and the first half 266, and is spaced from the vertical plane Y the same magnitude of distance as point 278A. Therefore there are many points on the second half 268 which are closer to the point 278A than point 280, and therefore the second half 268 is closer to the point 278A than the first half 266. It will also be appreciated that any point on the lower surface, such point being disposed on an opposite side of the vertical plane X to the first half 266, will be closer to the second half 268 of the seat portion 258 than the first half 266 thereof.

Regarding positioning of various points, as can be understood visually, the imaginary vertical plane Y is interposed between the first and second points (278A, 278B) and the rear edge 262, but the vertical plane Y is not interposed between the first and second points (278A, 278B) and the front edge 262, thus in the present example:
- the first and second points (278A, 278B) on the lower surface 250 are closer to the front edge 264 of the seat portion 258 than the rear edge 262 thereof; and
- the first and second points (274A, 274B) on the seat portion 258 are each disposed closer to the front edge 264 of the seat portion 258 than the rear edge 262 thereof.

Regarding distances between various points, in the present example:
- the first and second points (278A, 278B) on the lower surface 250 are separated by a distance D 1 of about 600 mm;
- the first and second peripheral edges (263, 265) of the seat portion 258 are separated by a distance D2 of about 500 mm;
- the first and second points (274A, 274B) on the seat portion 258 are separated by a distance D3 of about 450 mm;
- the first and second halves (266, 268) each have a longitudinal dimension L1 extending between the rear and front edges (262, 264) of about 500 mm; and
- the first and second halves (266, 268) each have a transverse dimension perpendicular to the longitudinal dimension having a distance of half of D2, i.e. about 250 mm.

Referring to Fig. 4C, it will be appreciated that in the present example the closest point on the first peripheral edge 263 to the second point 278B on the lower surface 250, is the point designated as 284A which is disposed at the intersection of the first peripheral edge 263 and the bottom surface 267 of the seat portion, and is spaced from the vertical plane Y the same magnitude of distance as point 278B. Additionally, the closest point on the second peripheral edge 265 to the second point 278 on the lower surface 250, is the point designated as 284B which is disposed at the intersection of the second peripheral edge 265 and the bottom surface 267 of the seat portion, and is spaced from the vertical plane Y the same magnitude of distance as point 278A. Since in the present example the first and second peripheral edges (263, 265) are straight and parallel with each other, the distance points that are an equal distance from the vertical plane Y, such as points 284A and 284B, is D2. Thus it is seen that the first and second points (278A, 278B) on the lower surface 250 are separated by a distance D1, which has a magnitude greater than the distance D2 between points (284A, 284B) on the first and second peripheral edges closest to the second and first points (278A, 278B) on the lower surface 250.

With reference to Fig. 4A, an angle α1 is formed between the first lower elongated suspension element 270A and the bottom surface 267. Additionally, an angle α2 is formed between the second lower elongated suspension element 270B and the bottom surface 267. It should be appreciated that more acute angles of α1 and α2 may provide better suspension of the suspension seat during an explosion under the lower surface of the vehicle.

With reference to Fig. 4C, an X-shaped arrangement, generally designated as 286, is formed by at least a portion of the first and second lower elongated suspension elements (270A, 270B).

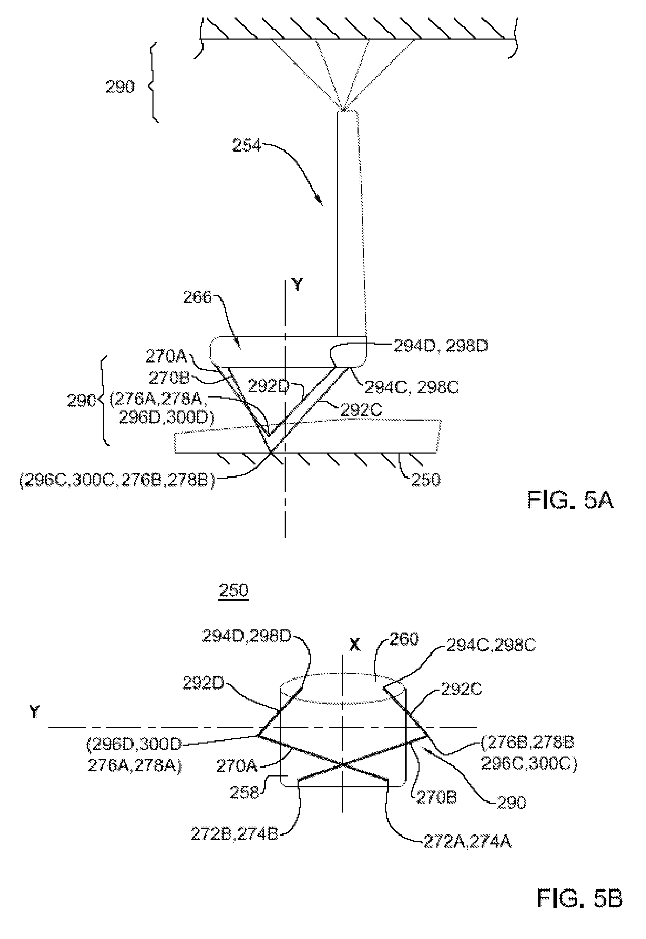

With reference now to Figs. 5A and 5B, a further example of suspension system, generally designated as 255, for use in a vehicle (not shown) comprising a suspension seat 254 and a suspension apparatus 290 is illustrated. All elements in Fig. 5A are identical to those shown in Fig. 5B, except that the suspension apparatus 290 comprises third and fourth lower elongated suspension elements (292C, 292D).

Drawing attention also to Fig. 5E, the third lower elongated suspension element 292C comprises a first end 294C and a second end 296C. The first end 294C is connected to a third point 298C on the seat portion at the first half 266 thereof. The second end 296C is connected to a third point 300C on the lower surface 250. The fourth lower elongated suspension element 292D comprises a first end 294D and a second end 296D. The first end 294D is connected to a fourth point 298D on the seat portion at the second half 268 thereof. The second end 296D is connected to a fourth point 300D on the lower surface 250. Thus it can be seen that the first and fourth points on the lower surface (278A, 300D) constitute a single spatial point and the second and third points (278B, 300C) on the lower surface constitute a single spatial point.

It will be appreciated that the points on the lower surface may be in different positions.

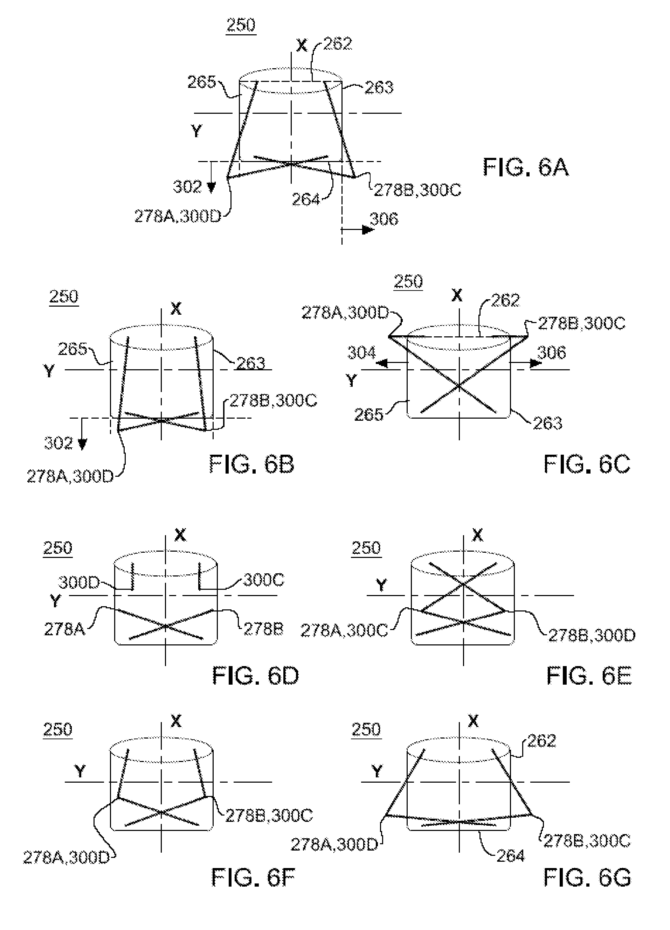

For example Figs. 6A-6C all show a similar suspension apparatus arrangement as that shown in Figs. 5A and 5B, except that:
- in Fig. 6A
   ○ the first and fourth points on the lower surface (278A, 300D) are spaced from the front edge 264, in a direction away from the rear edge (262) (such direction being shown by arrow 302) and are spaced from the second peripheral edge 265, in a direction away from the first peripheral edge (263) (such direction being shown by arrow 304);
   ○ the second and third points on the lower surface (278B, 300C) are spaced from the front edge 264, in a direction away from the rear edge (262) (such direction being shown by arrow 302) and are spaced from the first peripheral edge 263, in a direction away from the second peripheral edge (265) (such direction being shown by arrow 306);
- in Fig. 6B
   ○ the first, second, third and fourth points on the lower surface (278A, 278B, 300C, 300D) are spaced from the front edge 264, in a direction away from the rear edge (262) (such direction being shown by arrow 302);
- in Fig. 6C
   ○ the first and fourth points on the lower surface (278A, 300D) are spaced from the second peripheral edge 265, in a direction away from the second peripheral edge (263) (such direction being shown by arrow 304), and are proximate the rear edge 262 of the seat portion; and
   ○ the second and third points on the lower surface (278B, 300C) are spaced from the first peripheral edge 263, in a direction away from the second peripheral edge (265) (such direction being shown by arrow 306), and are proximate the rear edge 262 of the seat portion.

Regarding the position of the points on the floor:
- as seen in Fig. 6D, the first point, second point, third point and fourth point on the lower surface may each spaced from each other;
- as seen in Fig. 6E, the first and third points on the lower surface may constitute a single spatial point and the second and fourth points on the lower surface may constitute a single spatial point;
- as seen in Fig. 6F, the first point, second point, third point and fourth point on the lower surface may each be underneath the seat portion; and
- as seen in Fig. 6F, the first point, second point, third point and fourth point may be closer to the front edge 264 than the rear edge 262 of the seat portion.

An advantage of points on the floor being proximate to the front edge of a seat portion may be easy access to secure and release elongated suspension elements connected thereto.

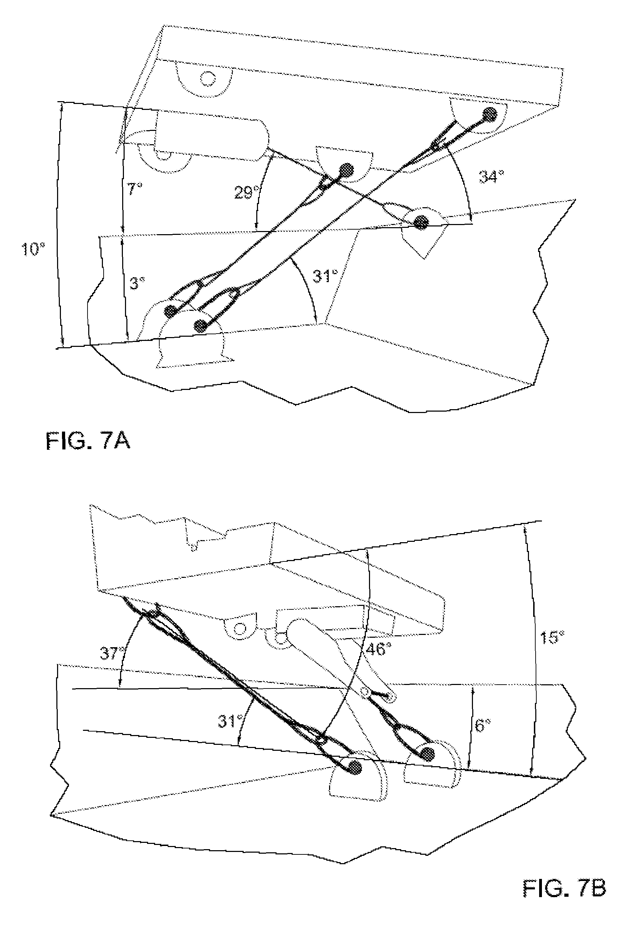

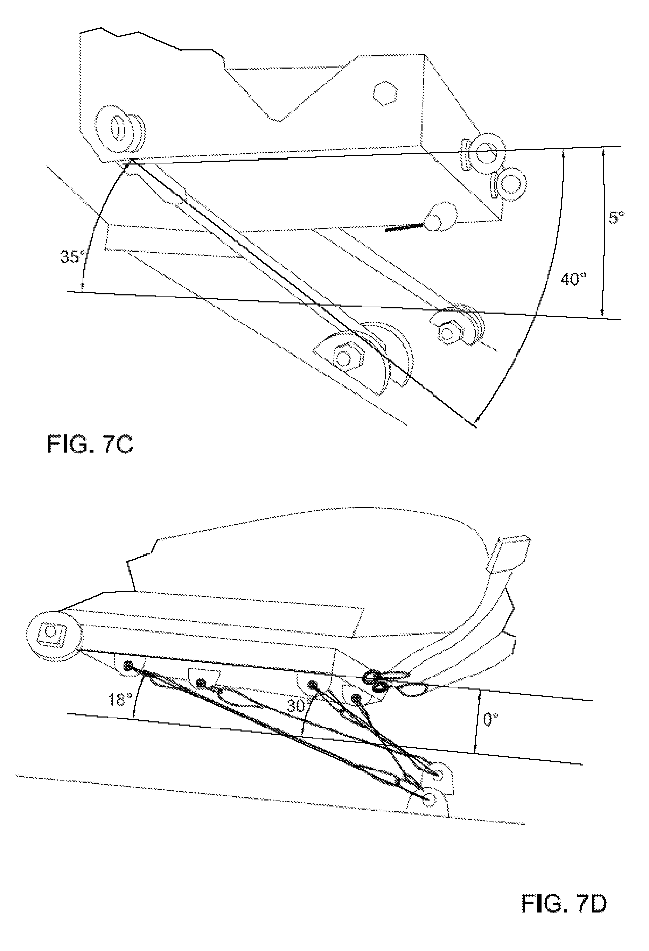

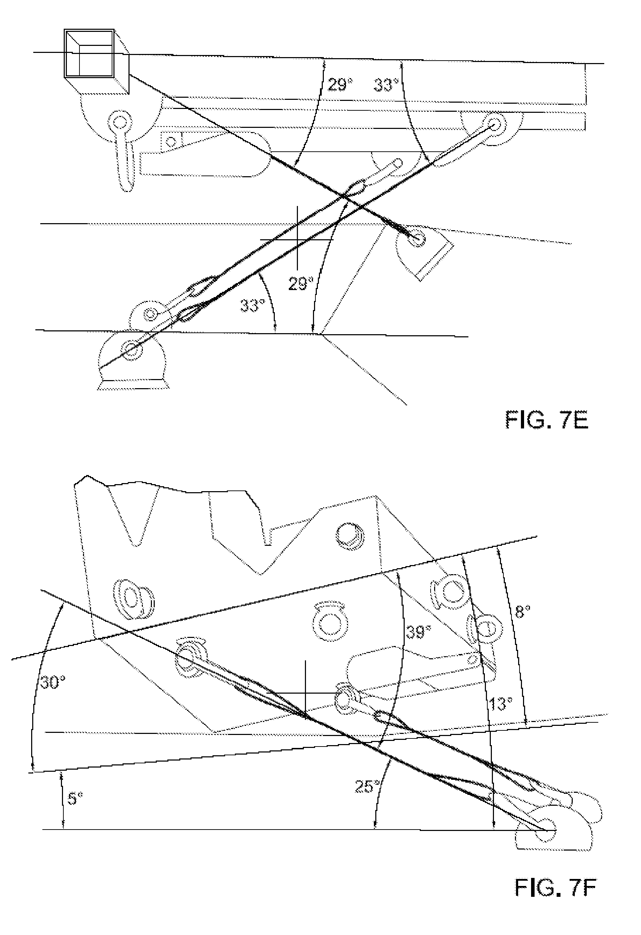

With reference to Figs. 7A to 7F, there is shown a number of examples of elongated suspension elements connecting seat portions and lower surfaces of vehicles, with acceptable angles of the elongated suspension elements being specified therein. It will be appreciated, however, that other angles may be acceptable.

Turning now to Figs. 8A to 8C, there is shown a suspension system, generally designated as 300, comprising a first, second, third and fourth elongated suspension element (270A, 270B, 292C, 292D) in a arrangement similar to that shown in Fig. 6F, except that the second ends of each of the elongated suspension elements (270A, 270B, 292C, 292D) are indirectly connected to first and second points (302A, 302B) on the lower surface 250.

The indirect connection is via:
- a second end 276A of the first lower elongated suspension element 270A being connected to a first connection element 304A higher than and spaced from the first point 302A on the lower surface 250;
- a second end 276B of the second lower elongated suspension element 270B being connected to a second connection element 304B higher than and spaced from the first point 302A on the lower surface 250;
- the suspension apparatus further comprising first and second connection elongated suspension elements (306A,308A);
- the first connection elongated suspension element 306A comprising a first end 306B connected to the first connection element 304A and a second end 306C connected to the first point 302A on the lower surface;
- the second connection elongated suspension element 308A comprising a first end 308B connected to the second connection element 304B and a second end 308C connected to the second point 302B on the lower surface;
- the third and fourth elongated suspension (292C, 292D) elements are connected to the first and second connection elements (304A, 304B).

It will be understood that:
- the first point on the lower surface may be directly underneath the first connection element or spaced therefrom in a direction away from the first half of the lower portion, in such case the first point may be at the location shown by arrow 310A; and
- the second point on the lower surface may directly underneath the second connection element or spaced therefrom in a direction away from the second half of the lower portion, in such case the first point may be at the location shown by arrow 310B.

It can also be seen that the back portion 312 is partially transparent.

Additionally, each of the first and second elongated suspension elements (270A, 270B) comprise a fast release detachment mechanism (314A, 314B), allowing the front edge 264 of the seat portion to be quickly released and, if needed, pivoted, when the fast release detachment mechanism is in a detached state.

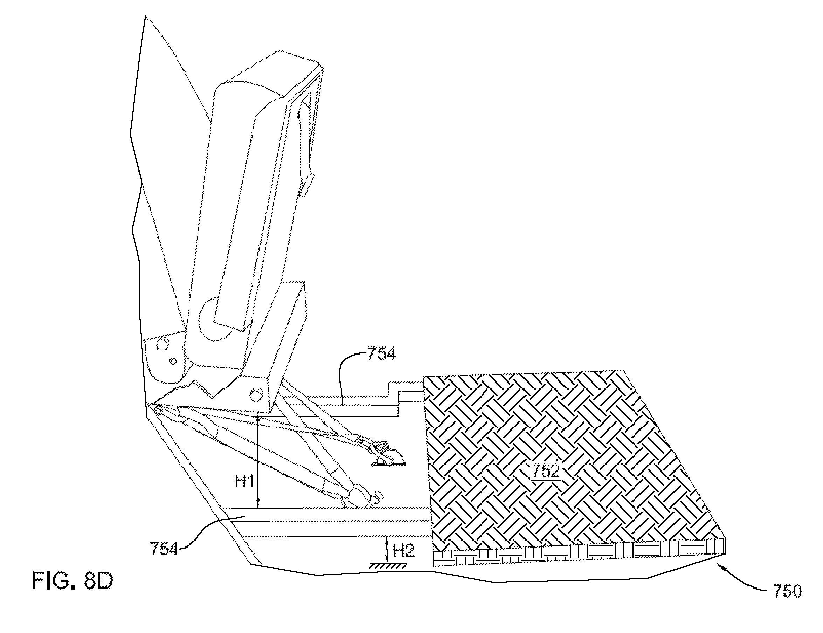

Such indirect connection may be useful when used with a floating floor having apertures formed therein. An example of such floating floor is shown in Figs. 8D to 8H.

With reference to Figs. 8D to 8F there is shown a platform constituted by an elevated floor 750, spaced from the lower surface of the vehicle and extending between the first and second objects (732,734) (Fig. 8E). The elevated floor is disposed at a height H1 of 250mm lower than the height of the lower portion of an adjacent object.

In any case, the height (not shown) of the lower portion is at least 1000mm from a portion of the upper surface of the vehicle directly above the lower portion of the object.

The floor may comprise a planar surface 752, a plurality of connected rigid support members 754 upon which the surface is mounted, and a plurality of rigid connection elements 756; the rigid connection elements each comprising a lower end connected to one of the rigid support members and an upper end connected to the object or additional object.

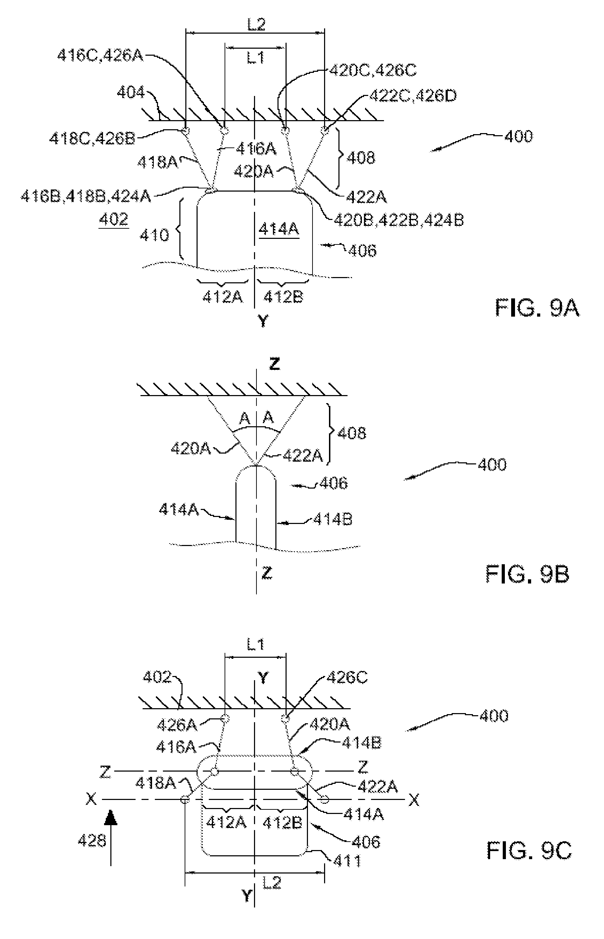

With reference to Figs 9A to 9C, there is shown a suspension system generally designated as 400, for use in a vehicle (not shown) having side and upper surfaces (402, 404). The suspension system 400 comprises an object 406, which in the present example is a suspension seat, and a suspension apparatus 408 for holding the object 406 in a suspended position in the vehicle.

The object 406 comprises an upper portion 410 and a lower portion 411 (seen in Fig. 9C only). The upper portion 410 having adjacent first and second side-halves (412A, 412B) bisecting the major faces (414A, 414B) thereof. For ease of understanding an imaginary vertical reference plane Y is shown in Figs. 9A and 9C, bisecting the major faces (412A, 412B).

The suspension apparatus 408 comprises a first upper elongated suspension element 416A, a second upper elongated suspension element 418A, a third upper elongated suspension element 420A and a fourth upper elongated suspension element 422A, each of which comprising a first end (416B, 418B, 420B, 422B) and second end (416C, 418C, 420C, 422C) and being adapted to anchor the upper portion 410 to the upper surface 404 of the vehicle.

The first ends (416B, 418B) of the first and second upper elongated suspension elements (416A, 418A) engaging a first point 424A on the upper portion 410 at the first half 412A thereof. The first ends (420B, 422B) of the third and fourth upper elongated suspension elements (420A, 422A) engaging a second point 424B on the upper portion 410 at the second half 412B thereof.

The second end 416C of the first upper elongated suspension element 416A engages a first point 426A on the upper surface 404. The second end 418C of the second upper elongated suspension element 418A engages a second point 426B on the upper surface 404. The second end 420C of the third upper elongated suspension element 420A engages a third point 426C on the upper surface 404. The second end 422C of the fourth upper elongated suspension element 422A engages a fourth point 426D on the upper surface 404.

Referring to Fig. 9C, it can be seen that the first and third points (426A, 426C) on the upper surface may be spaced from the upper part of the upper portion in a direction away from the lower portion (the direction indicated by arrow 428).

Referring to Fig. 9A, the first and third points (426A, 426C) on the upper surface are separated by a distance L1 of 100 mm, and the second and fourth points (426B, 426D) on the upper surface are separated by a distance L2 far greater than 100 mm.

Both in the front and side views in Figs. 9A and 9B, it can be seen that the first and second upper elongated suspension elements (416A, 418A) are seen to form a substantially V-shaped arrangement, and the second and third upper elongated suspension elements (420A, 422A) together form a substantially V-shaped arrangement.

Referring to Fig. 9B, each of the first (not seen), second (not seen), third and fourth upper elongated suspension elements forms an angle A of at least 10 degrees from a imaginary vertical reference plane Z, passing through the respective point on the upper portion 406 to which the elongated suspension elements are connected.

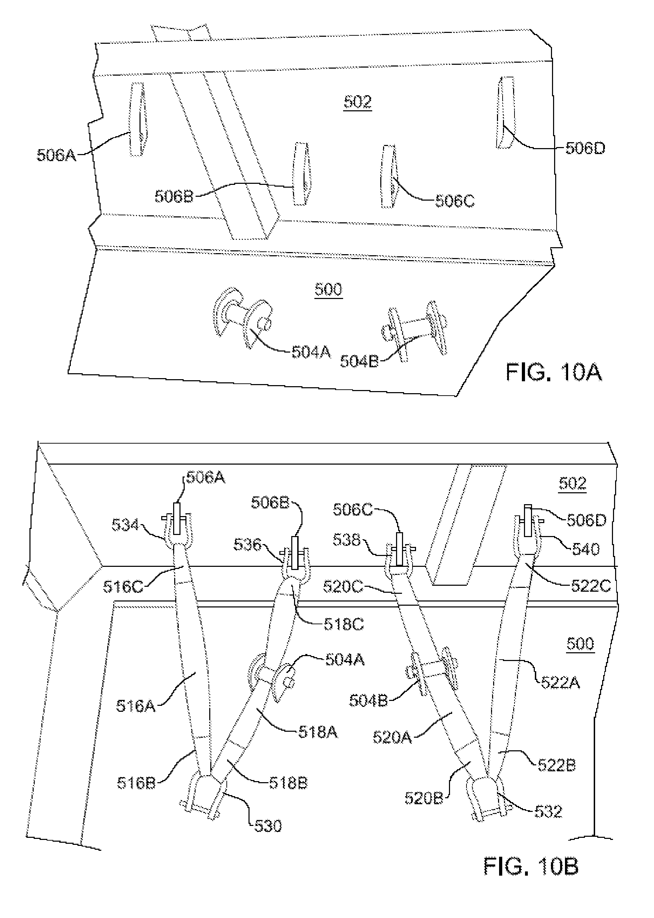

Turning attention now to Figs. 10A to 10C, there is shown side and upper surfaces (500, 502) of a vehicle (not shown). Mounted on the side surface 500 are first and second dynamic connection elements (504A, 504B). Mounted on the upper surface 502 are first, second, third and fourth static connection elements (506A, 506B, 506C, 506D). Further seen is a first upper elongated suspension element 516A, a second upper elongated suspension element 518A, a third upper elongated suspension element 520A and a fourth upper elongated suspension element 522A, each of which comprising a first end (516B, 518B, 520B, 522B) and second end (516C, 518C, 520C, 522C) and being adapted to anchor an object (not shown) to the upper surface 502 of the vehicle. The first and third elongated suspension elements (516A, 520A) each have a length of about 230 mm and the second and fourth elongated suspension elements (518A, 522A) each have a length of about 270 mm. Each first end (516B, 518B, 520B, 522B) and second end (516C, 518C, 520C, 522C) engage a carabiner (530, 532, 534, 536, 538, 540) via which they are connected to the upper surface 502 of the vehicle or object (not shown).

Notably, the dynamic connection elements (504A, 504B) are slanted away from the vertical so as to allow an object suspended by the elongated suspension elements to be held in a stable manner, i.e. by providing appropriate stability in varied directions.

Additionally, it should be mentioned that the V-arrangement seen, may be used to support suspension seats, similar to the suspension apparatus described above with respect to Figs. 9A-9C.

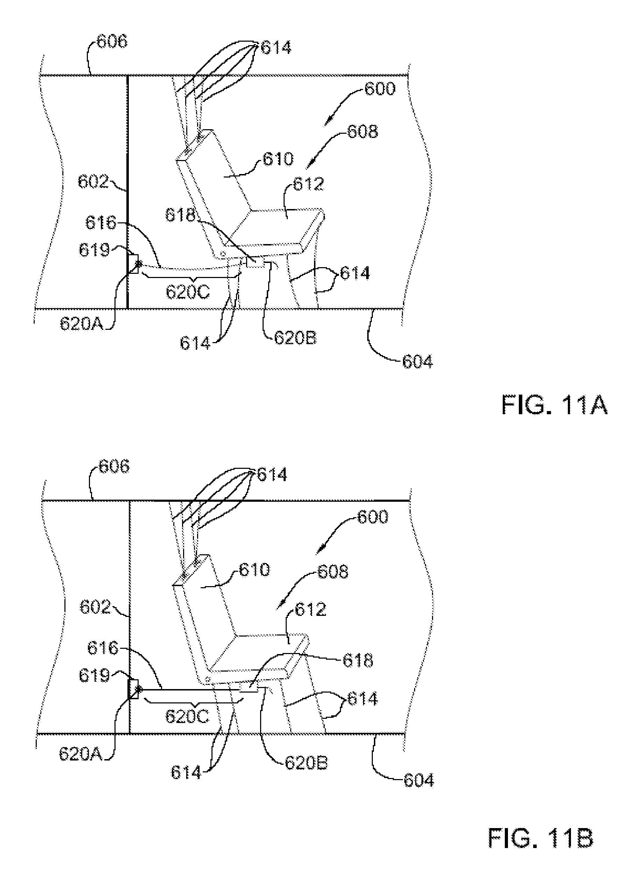

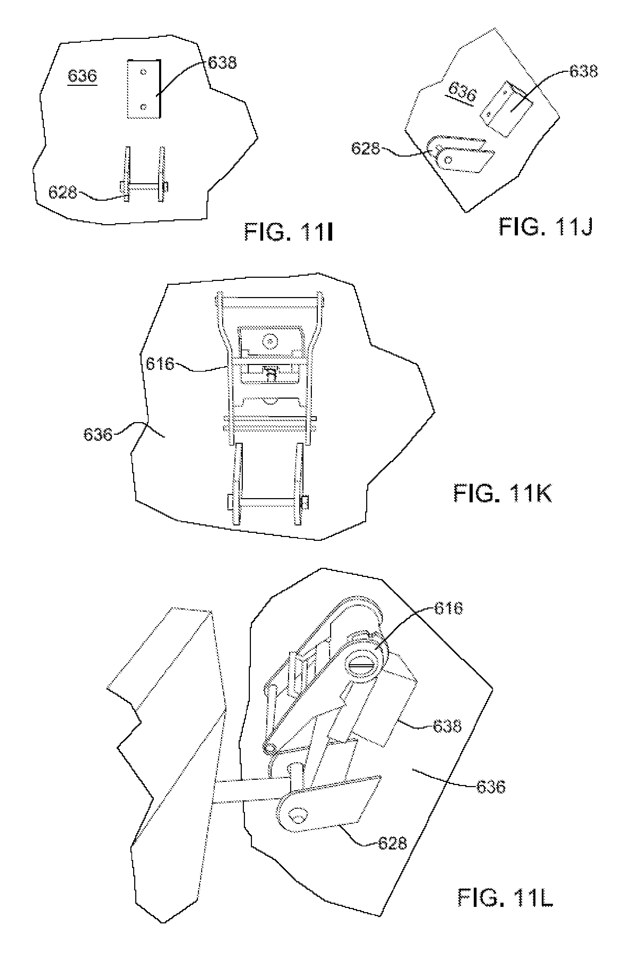

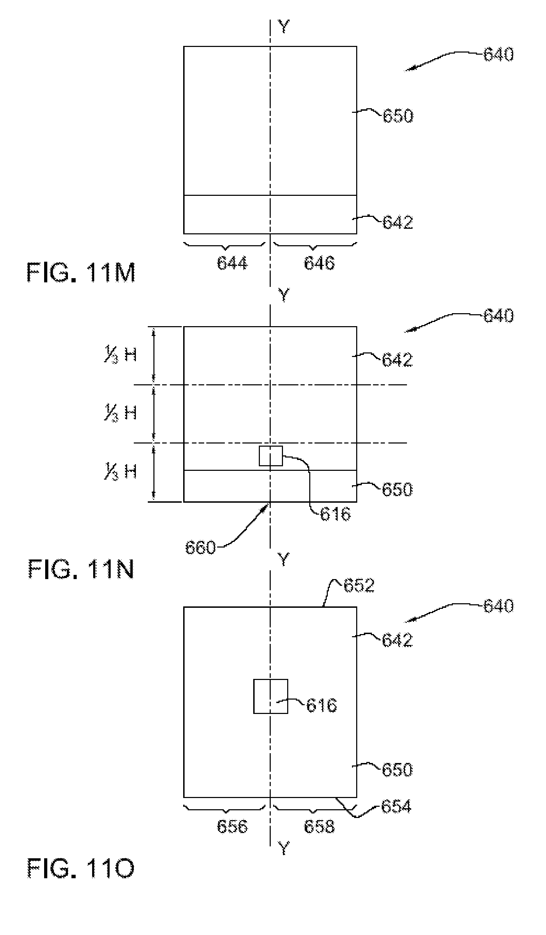

Turning attention to Figs 11A and 11B, there is shown a suspension system generally designated as 600 for use in a vehicle (not shown) having side 602, lower 604 and upper surfaces 606. The suspension system comprises an object 608 and a suspension apparatus 610 for holding the object in a suspended position in the vehicle. The object 608 comprises an upper portion 610 and a lower portion 612. The suspension apparatus comprising several elongated suspension elements 614 adapted to hold the object 608 in the suspended position, a tensioning strap 616 and a single tensioning mechanism 618. The tensioning strap 616 having a first end 620A, a second end 620B and a intermediate portion 620C extending therebetween. The tensioning mechanism 618 engaging the intermediate portion 620C of the tensioning strap 616. The first end 620A of the tensioning strap 616 engaging a static connection element on the side surface 602.

It should be noted that the tensioning mechanism 618 is positioned in the center of the lower portion 612, and thus is only shown for ease of understanding in Figs 11A-11H.

As can be seen in Fig. 11A the intermediate portion 620C of the tensioning strap 616 is slack, as are the lower elongated suspension elements 614.

In Fig. 11B it can be seen that the tensioning mechanism has been operated, causing the tensioning strap to become taut, the object is moved in the direction of arrow 624 thereby causing the elongated suspension elements to become taut and suspend the object in the suspended position.

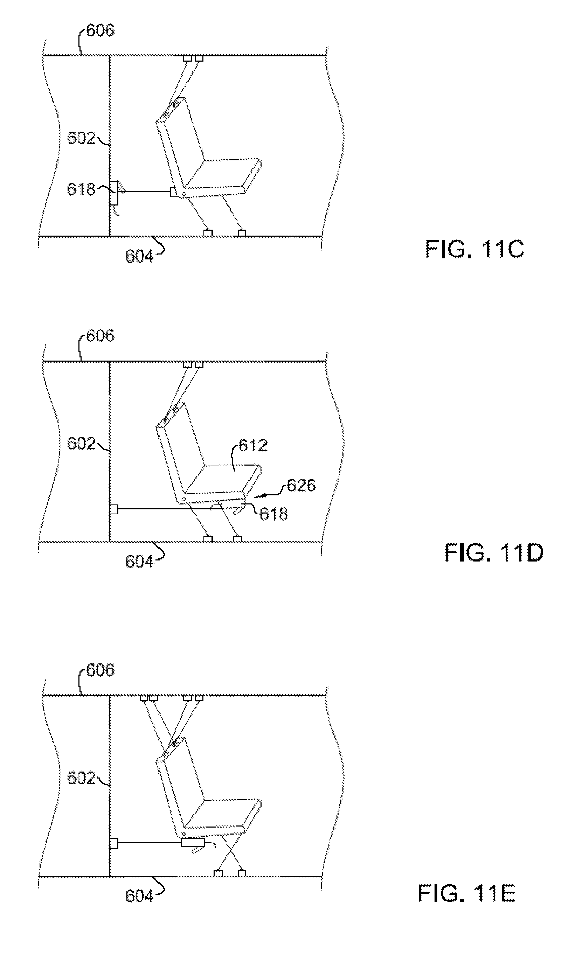

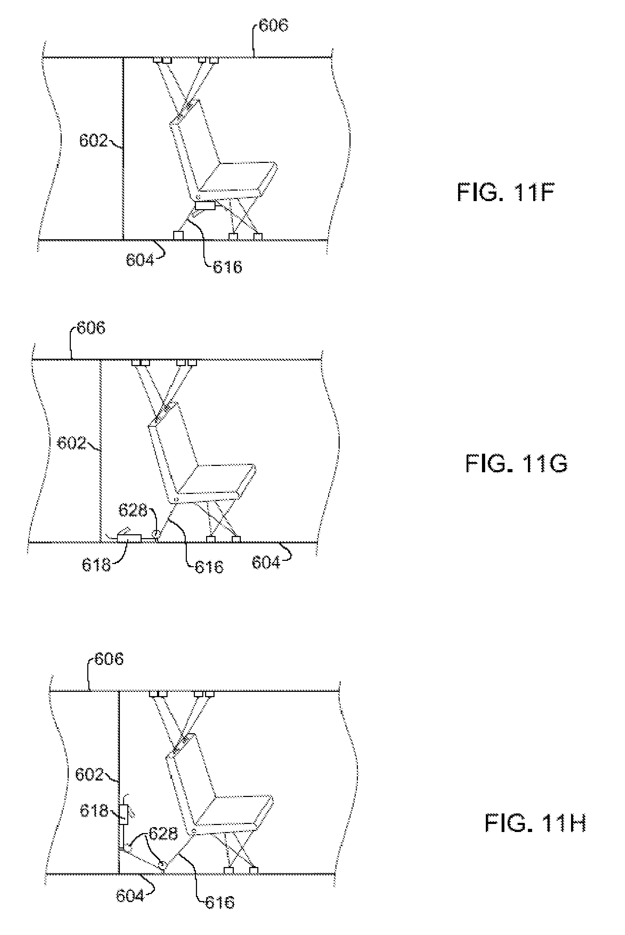

The arrangement of the tensioning mechanism and elements connected thereto may be done in a variety of ways, for example:
- as seen in Fig. 11C, the tensioning mechanism 618 is on the side surface 602, which may allow easier access to the tensioning mechanism 618;
- as seen in Fig. 11D, the tensioning mechanism 618 is on a front part 626 of the lower portion, which may allow easier access to the tensioning mechanism 618;
- as seen in Figs. 11E and 11F, such arrangement may work with different configurations of elongated suspension elements;
- as seen in Figs. 11G and 11H, the tensioning strap may be diverted through dynamic connection elements 628 on the side surface or lower surface, to provide for the suspension seat to be moved in an appropriate direction, and allowing the tensioning mechanism to be in an easy position to reach, and allowing ease of operation of the tensioning mechanism by ensuring that the tensioning strap engages the tensioning mechanism in an angle close to parallel with the surface on which the tensioning mechanism is mounted.

Drawing attention to Figs. 11I-11L, an example tensioning mechanism 616 in the form of a manual ratchet is shown, mounted on to a wall 636 via a bracket 638, and adjacent to a dynamic connection element 628.

Referring now to Figs. 11M to 11O, positioning of a tensioning mechanism 616 is shown with respect to an object 640. The object being bisected by an imaginary plane denoted as Y.

An upper portion 642 of the object 640 may further comprise adjacent first 644 and second side-halves 646 bisecting the major faces (648A, 648B) thereof, and a lower portion 650 may further comprise opposite rear and front edges (652, 654), and adjacent first and second halves (656, 658) extending between the rear and front edges (652, 654). In such case the tensioning mechanism 616 may be mounted on the object on the upper portion 642 and/or the lower portion 650, or at a point of intersection of the first and second halves thereof 660.

The tensioning mechanism 616 in Fig. 11N is mounted on the upper portion 642 at a point thereon within the lowest third of the upper portion, when the object 640 is in a suspended position.

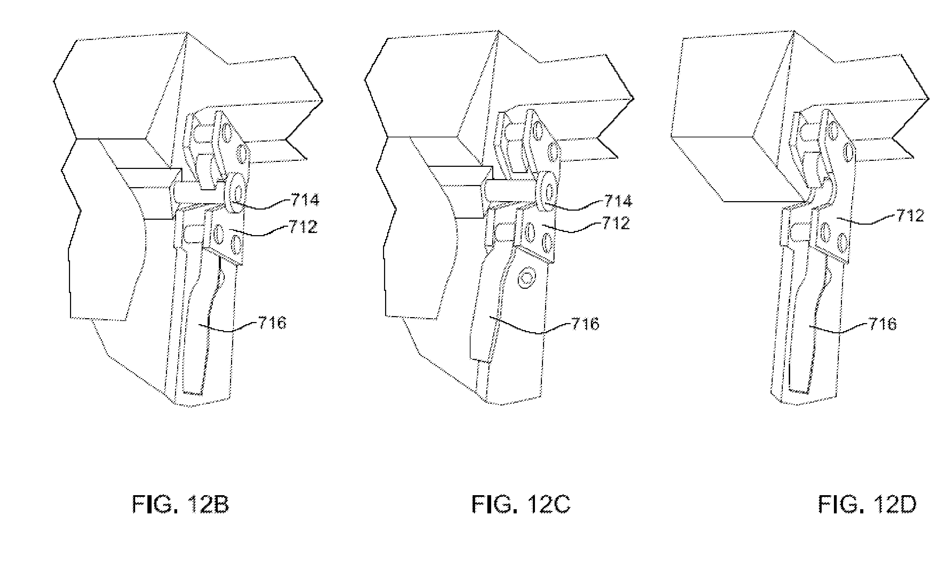

Turning now to Fig. 12A there is shown a suspension system 700 comprising an object 702 and a suspension apparatus 704 for holding the object in a suspended position.

The object 702 comprises a detachably attachable engagement member 706 secured thereto adapted for suspending another item 708 spaced from lower and upper surfaces (710, 712) between which the object 702 is suspended.

The item 712 may be fitted with an attachment member 714, with which it is secured to the engagement member.

Referring to Figs. 12B to 12D, there is shown an attachment member 714 and engagement member 712 suitable for this purpose. The engagement member is a mechanism comprising a handle 716 for release of the attachment member therefrom.

The item in this example in Fig. 12A is an ammunition box adapted for detachable attachment to the engagement member.

In Fig. 12A it can be seen that the object 702 further comprises a storage unit 720 mounted on the suspension apparatus 704, via four upper elongated suspension elements 713 thereof, above the upper portion 722 of the object.

The storage unit is made of a flexible net and surrounds the upper elongated suspension elements to define a storage area therebetween.

Notably, the textile material does not extend until the upper surface 724, to allow a user to insert objects between the gap formed therebetween.

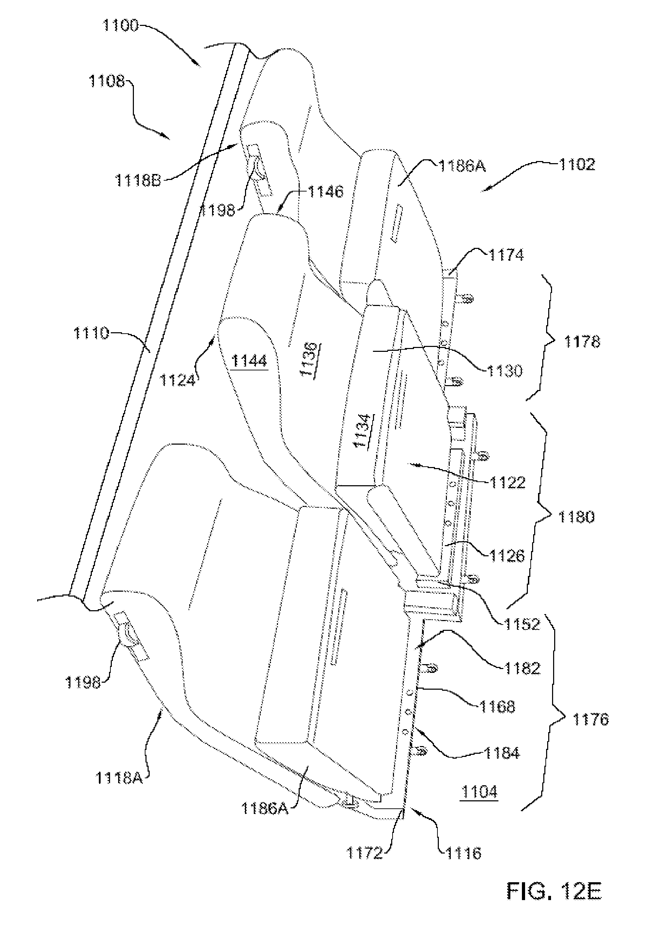

Turning to Figs. 12E to 12G, there is shown a vehicle (an internal portion of which is shown and generally designated 1100), comprising a suspension system, generally designated as 1102 for use in the vehicle 1100.

The vehicle 1100 comprises lower 1104 and upper surfaces 1106, and a rear wall 1110.

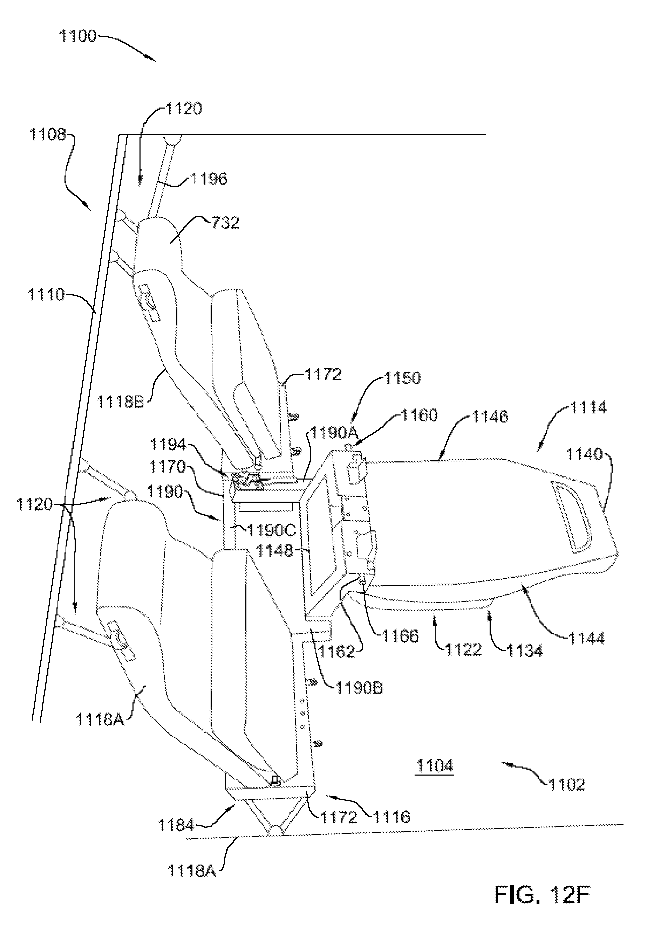

The suspension system 1102 comprises a first seat, generally designated as 1114 (Fig. 12F), a base 1116, additional seats (1118A, 1118B), and a suspension apparatus (Fig. 12F), generally designated by the numeral 1120, suspending the base 1116 and the seats (1114, 118A, 118B) in a suspended position via elongated suspension elements 1196. The suspended position being spaced from the lower surface 1104 and upper surface 1106 of the vehicle 1100.

The first seat 1114 comprises a seat portion 1122, a back portion 1124, and a seat-base 1126 (Fig. 12E).

The seat portion 1122 comprises a rigid support section 1128, a cushioned section 1130 attached to the support section 1128, and opposite rear and front edges (1132, 1134, Fig. 12F).

The back portion 1124 comprises opposite first and second major surfaces (1136, 1138, seen in Figs. 12E and 12F, respectively), opposite top and bottom edges (1140, 1142, Fig. 12F), and opposite first and second side edges (1144, 1146).

The seat-base 1126 is cushioned, and comprises opposite front and rear edges (1148, 1150), and opposite first and second edges (1152, 1154) extending between the front and rear edges (1148, 1150).

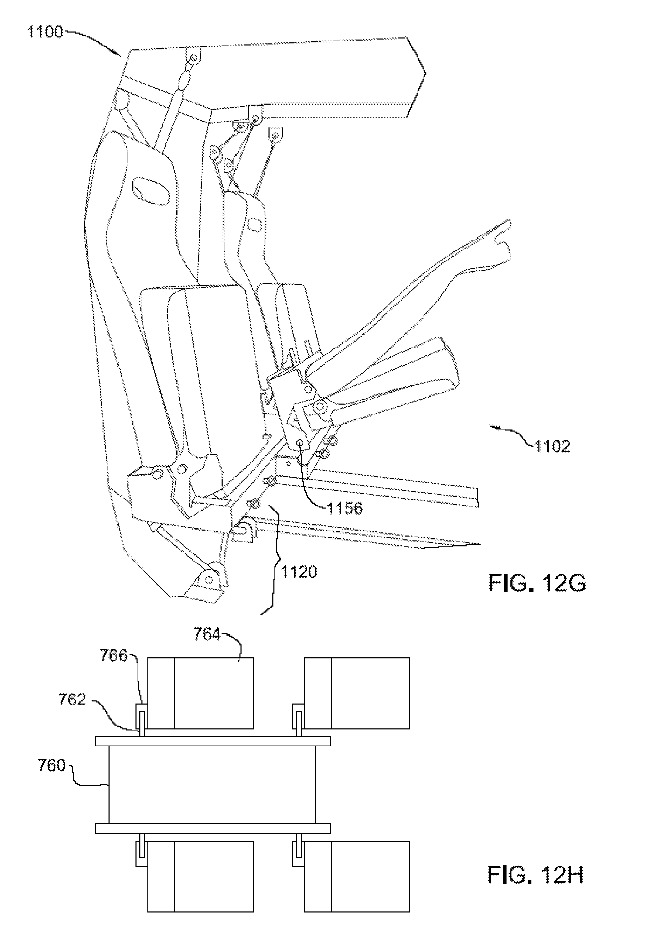

The front edge 1148 comprises a front-pivot 1156 (Fig. 12G), about which the seat-base 1126 is connected to the base 1116 in a pivotal manner.

The rear edge 1150 comprises mechanical stoppers 1158, for safely halting motion of the seat-base 1126, when the first seat 1114 is brought to a seat position shown in Fig. 12E.

The first and second edges (1152, 1154) each comprises a front-pivot 1156, about which the seat-base 1126 is connected to the base 1116 in a pivotal manner, a central-pivot 1158, about which the seat portion 1122 is connected to the seat-base 1126 in a pivotal manner, and two outwardly projecting attachment member 1160 (best seen in Fig. 12F).

Drawing attention to Fig. 12F, it can be seen that each attachment member 1160, in this example, is a cylindrical metal bar having a first end 1162 and a second end 1164. The first end 1162 is fixed to a seat-base 1126 of the first seat 1114. The second end 1164 comprises an disc-shaped mechanical stopper 1166 affixed thereto.

The base 1116 is made of mild steel, and comprises opposite front and rear edges (1168, 1170), and opposite first and second edges (1172, 1174, best seen in Fig. 12E) extending between the front and rear edges (1168, 1170). Drawing attention to Fig. 12E, it can be seen that the base 1116 further comprises a first section 1176, adjacent the first edge 1172, a second section 1178, adjacent the second edge 1174, and a central section 1180 extending between the first and second sections (1172, 1178). Additionally, the base 1116 comprises an upper face 1182 and a lower face 1184. The lower face 1184 being substantially flat along the entire length thereof.

The seats (1114, 1118A, 1118B) are mounted on the base 1116. Notably seat 1114 is mounted on the central section 1180 of the base 1116, and is not connected to any of the elongated suspension elements 1196. Thus the seat 1114 is fully suspended by the central section 1180 which in turn is held in a suspended position by the seats (1118A, 1118B) which themselves are connected to elongated suspension elements 1196 that are anchored to the upper surface 1106 of the vehicle 1100. The central section 1180 is also held by the first and second sections (1172, 1178) of the base 1116, these sections (1172, 1178) being anchored to the lower surface 1104 of the vehicle via elongated suspension elements 1196.

The base 1116 further comprises a frame 1190 extending upwardly from the upper face 1182. The frame 1190 includes side-frame elements (1190A, 1190B) and a rear frame-element 1190C. The frame 1190 is formed with a recess 1192 bounded by the side-frame elements (1190A, 1190B) and the rear frame-element 1190C.

Each of the side-frame elements (1190A,1190B) has an engagement member 1194 mounted thereon, as described in more detail with reference to Figs 12B to 12D.

The two additional seats (1118A, 1118B) are mounted respectively on the upper face 1182 of the first section 1176 and second section 1178 of the base 1116, in a manner which allows the seat portions thereof (1186A, 1186B) to pivot upwardly when not in use.

With reference to Fig. 12H a stretcher 760 comprising attachments members 762 is shown being held in a suspended position via four suspended objects 764 comprising engagement members 766.

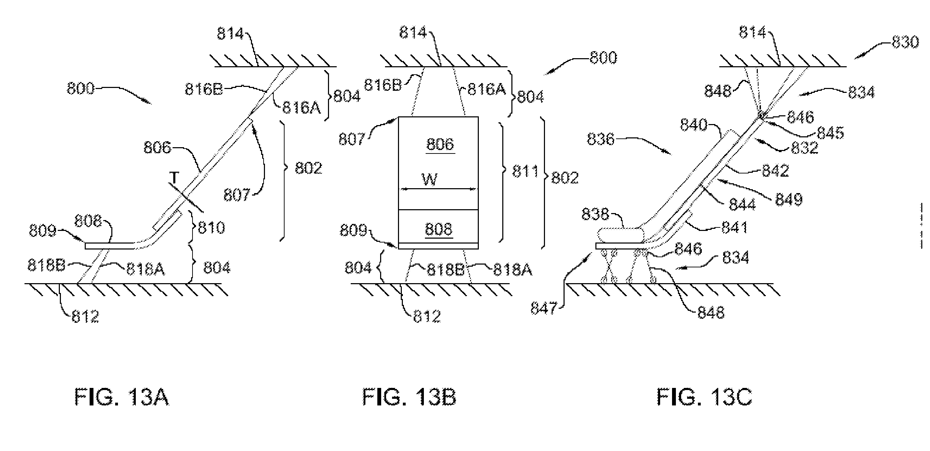

Referring now to Fig. 13A and 13B, there is shown a suspension system generally designated 800. The suspension system 800 comprises a holder having a sheet-like form, generally designated as 802, and a suspension apparatus, generally designated as 804.

The holder 802 comprises an upper portion 806 a lower portion 808, an upper end 807, a lower end 809, and an intermediate portion 811 extending between the upper and lower ends (807, 809). The two portions are secured to each other at a merging section 810. In this example the upper end 807 has a linear shape and the lower end 809 has a non-linear curved shape.

The suspension system 800 is mounted in a vehicle (only partially shown) having a lower surface 812 and an upper surface 814.

The suspension apparatus comprises first and second upper elongated suspension elements (816A, 816B) and first and second lower elongated suspension elements (818A, 818B). Both of the lower and upper portions (806, 808) of the holder 802 are made of a hard rigid material having a transverse dimension W far greater than the thickness T thereof.

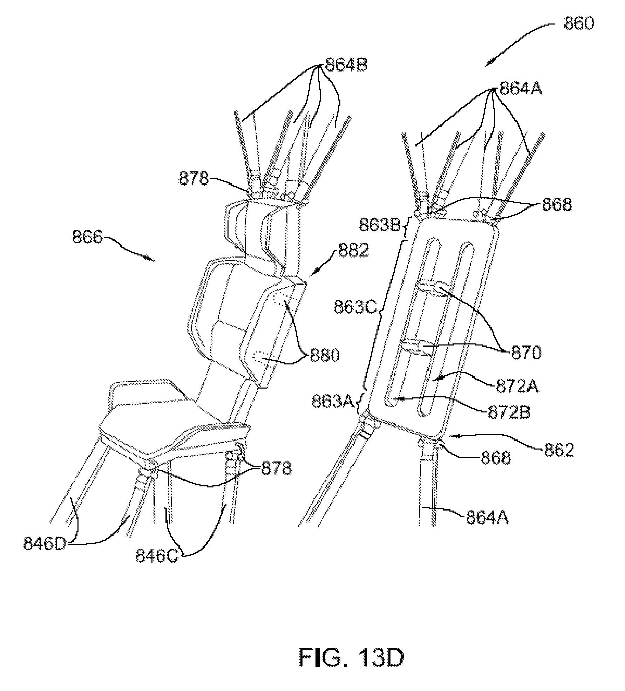

Rigid material is useful to ensure a holder substantially maintains it's shape even when put under high tension via a suspension apparatus. It will be appreciated that the holder shape shown in Figs. 13A and 13B is more inclined to change shape than other holder shapes, such as those described below with respect to Figs 13D-13F.

Referring now to Fig. 13C, there is shown a suspension system generally designated as 830. The suspension system 830 comprises a holder, generally designated as 832, and a suspension apparatus, generally designated as 834.

The holder 832 comprises an upper portion 842 a lower portion 841, an upper end 845, a lower end 847, and an intermediate portion 849 extending between the upper and lower ends (845, 847).

The suspension system 830 further comprises a suspension seat 836 mounted on the holder 832.

The suspension seat 836 comprises a seat portion 838 mounted on the lower portion 841 of holder 802 and a back portion 840 mounted on the upper portion of the holder 832. The back portion further comprises a securing strap 844 which encircles the upper portion 842 of holder 832, securing the back portion 840 to the holder 832.

It would be understood that an object may be secured to the holder in any suitable manner, and that the holder may be formed with elements adapted to allow securing of objects thereto.

It should be further noted that the upper end 845 and the lower end 847 are formed with static connection elements 846, by which the suspension elements 848 of the suspension apparatus are secured to the holder 832.

Notably the object mounted on the holder, in this case a suspension seat, is free of elements, such as static connection elements, adapted to engage the suspension apparatus 834. Additionally, it can be seen that this is an example of a holder completely suspending another object in a vehicle.

Referring now to Fig 13D, a suspension system generally designated as 860 is shown. The suspension system 860 comprises a holder 862, a several elongated suspension elements (864A, 864B, 864C, 864D), and a suspension seat 866.

The holder 862 comprises lower and upper ends (863A, 863B) and an intermediate portion 863C extending therebetween, several static connection elements 868 fixed to the lower and upper ends (863A, 863B), and two mounting elements 870.

The intermediate portion 863C is formed with two oval shaped slots (872A, 872B). It will be appreciated that slots reduce the weight of a holder and therefore may be of any desired shape.

The elongated suspension elements 864A are connected to the holder 862 via the static connection elements 868.

The mounting elements 870 are in the form of rigid projections adapted to at least partially support the weight of the suspension seat 866 and a person (not shown) seated thereon.

The suspension seat 866 comprises a seat portion 874, a back portion 876, and several static connection elements 878. The back portion 876 is formed with recesses 880, shown in phantom, formed at a back area 882 thereof. The recesses correspond to the rigid projections 870 and are adapted to securely receive same.

As will be appreciated the suspension seat 886 is of conventional design, having upper and lower elongated suspension elements (864B, 864C) with the exception of the modification constituted by recesses 880.

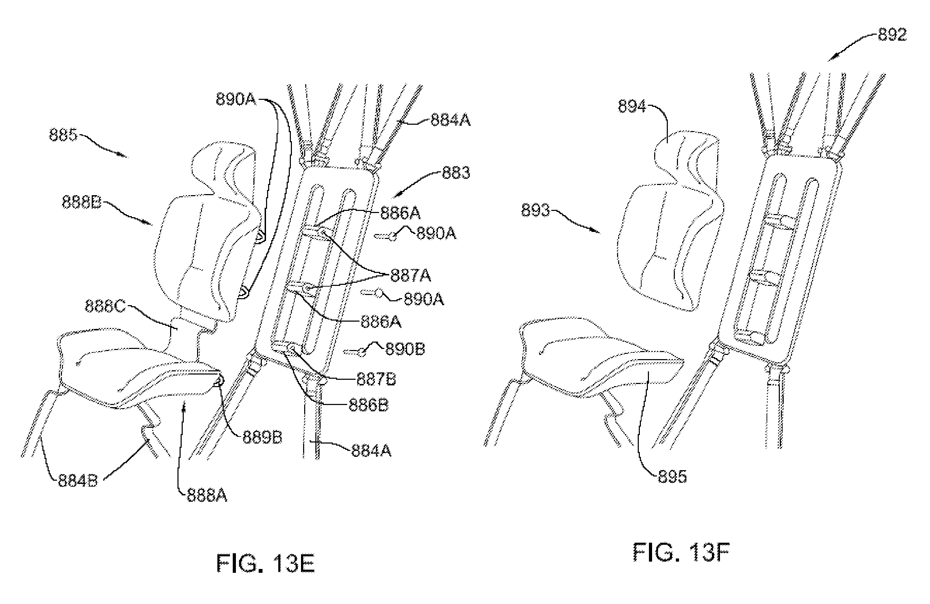

Referring now to Fig 13E, a suspension system generally designated as 882 is shown. The suspension system 882 comprises a suspended holder 883, several elongated suspension elements (884A, 884B), and a suspension seat 885.

The holder 883 comprises two upper mounting elements 886A and a lower mounting element 886B. Each mounting element (886A, 886B) is in the form of a rigid projection and is formed with a bore (887A,8 87B). The suspension system 882 further comprises corresponding securing pins (890A, 890B) adapted to fit in one of the bores (887A, 887B) for each mounting element (886A, 886B).

The suspension seat 885 comprises a seat portion 888A, a back portion 888B, and a flexible and elastic connection strip 888C extending therebetween.

The seat portion 888A comprises front and rear edges (899A, 899B). The front edge 889A is adapted to engage elongated suspension elements 884B. The rear edge 899B comprises a metal bracket 889B.

The back portion 888B comprises two metal brackets 889A.

In operation, to mount the seat 885 to the holder 883, the brackets 889A of the back portion 888B are aligned with the upper mounting elements 886A and the securing pins 890A are inserted into the bores 887A via the brackets 889A, a similar attachment being made with the seat portion 888A, securing pin 890B, bore 887B and brackets 889B.

To remove the seat 885 the pins (890A, 890B) may be quickly removed from the corresponding bores.

It will be understood that any suitable known attachment construction may be used for attaching and detaching an object to a holder.

Fig. 13F shows a similar construction to that shown in Fig. 13E, with a significant difference being that the seat portion and back portion are two separate components. In such example the holder may constitute part of the back portion and thereby reduce the weight of a seat by allowing a partial back portion to be used.

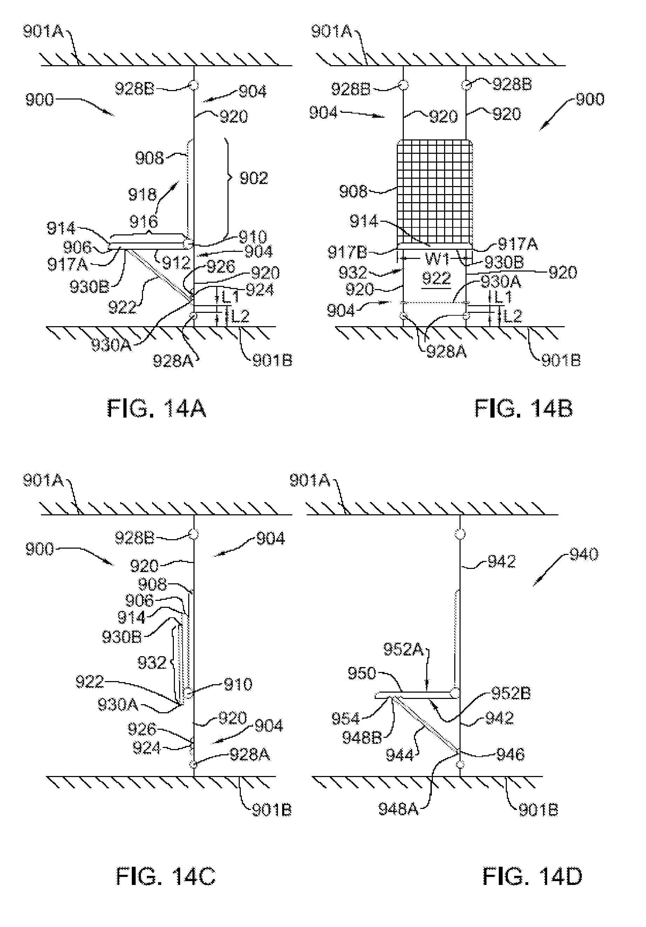

Referring to Figs. 14A to 14C, there is shown a suspension system generally designated as 900 for use in a vehicle (not shown) having lower and upper surfaces (901A, 901B). The suspension system 900 comprising a suspension seat, generally designated as 902, and a suspension apparatus, generally designated as 904 and being adapted to hold the suspension seat in a suspended position.

The suspension seat 902 comprising a rigid seat portion 906, a back portion 908 and a biasing mechanism 910 disposed at a merging point of the seat portion and back portion (906, 908). The rigid seat portion comprising first and second peripheral edges (917A, 917B)

The rigid seat portion 906 comprising opposite rear and front edges (912, 914), and an intermediate portion 916 extending therebetween.

The back portion being made of a net-like material, being substantially transparent.

The biasing mechanism is adapted to pivot the seat portion 906 towards the back portion 908 in the direction shown by an arrow designated as 918.

The suspension apparatus comprising elongated suspension elements 920 and a rigid support member 922.

The elongated suspension elements 920 are adapted to engage the lower and upper surfaces (901A, 901B) and the suspension seat 902. The suspension element 920 is formed at a lower portion thereof with three textile bulging portions 924, each bulging portion having a recess 926 formed between the bulging portion and an adjacent bulging portion 924. The suspension elements engaging the lower and upper surfaces (901A, 901B) via static connection elements 928A and 928B. A distance 01 between the lowest bulging portion 924 and the static connection element 928A being 20mm. A distance 02 between the lowest bulging portion 924 and the lower surface 901B being 80mm.

A distance W1 between the first and second peripheral edges (917A, 917B) is 420 mm.

The rigid support member 922 comprising first and second ends (930A, 930B) and an intermediate section 932 extending therebetween. The rigid support member having a plate shape. The first end 930A is adapted for detachably attachable engagement with the recesses 926 of the bulging portion 924. The second end 930B of the rigid support member 922 being adapted for pivotal engagement with the seat portion 914.

In operation, referring to Fig. 14A, it can be seen that the rigid support member 922 holds the front edge 914 of the seat portion 916 in a manner that a user may sit thereon without seat portion 916 collapsing. Notably, engagement of the rigid support member 922 with the recesses 926 and bulging portions 924 prevents the seat portion 916 from pivoting towards the back portion 908. As can be seen the rigid support member 922 allows the suspension system 900 to be free of supporting means extending from the seat portion 916 to the back portion 908 or suspension apparatus 920 at a point above the seat portion 916. Thus, a thin and textile seat may be used, allowing the seat to be of light weight, and space efficient.

Referring to Fig. 14C, upon disengaging the first end 930A from the recesses 926 the seat portion 916 pivots towards the back portion 908 via operation of the biasing mechanism 910. It can be seen that the pivotal connection of the rigid support member 922 with the rigid seat portion 916 allows the suspension seat 902 and rigid support member 922 to form a very compact shape. Referring to Fig. 14D there is shown another suspension system generally designated as 940 the suspension system is similar to that shown in Fig. 14A to 14C, except that the elongated suspension element 942 is free of bulging portions and recesses therebetween, the rigid support member 944 is pivotally attached to the elongated suspension elements 942 via a biasing mechanism 946 at a first end 948A of the rigid support member 944. Additionally, the seat portion 950 comprises top and bottom surfaces 952A and 952B, respectively. The bottom surface 952B is formed with a plurality of recesses 954. The rigid support member adapted to engage the recesses 954 via a second end 948B thereof.

Those skilled in the art to which this invention pertains will readily appreciate that numerous changes, variations and modifications can be made without departing from the scope of the invention mutatis mutandis. For example, any sufficiently strong connection elements may be used. Additionally, a part of the back portion engaging the suspension apparatus may be moved in any number of ways to allow passage through the back-support region, e.g. via a zip extending through the center of the back portion, by the entire back portion being detachable from the suspension seat, for example by fasteners being on each corner thereof, etc. The suspension seat may be placed at any position in a vehicle, for example at an exit thereof. The horizontal stabilizing element is an optional part of a suspension apparatus, and is added for providing a user more stability, and hence a more comfortable journey, during movement of the vehicle. Whilst an armored personnel carrier was exemplified, other vehicles such as planes and helicopters may also be examples of vehicles in accordance with the present invention. The suspension apparatus may be of any suitable configuration which can suspend a seat portion and a back portion and which may have a back-support region of sufficient size to allow passage therethrough. It should also be mentioned, that connection points between elongated suspension elements are not shown in all drawings but may be integral or attachable to the vehicle and suspension seat in accordance with the invention. Such connection elements may be attached to the suspension seat via a solid plate integral with or attached to the suspension seat and/or the seat portion or back portion may be formed with eyelets, etc.

## Claims

1. A vehicle comprising lower and upper surfaces, an object and a suspension apparatus for holding the object in a suspended position in the vehicle; the object having opposite rear and front edges, and adjacent first and second halves extending between the rear and front edges; the suspension apparatus being adapted to anchor the object to the lower surface of the vehicle via elongated suspension elements, and comprising first and second elongated suspension elements; each elongated suspension element comprising first and second ends and an intermediate portion therebetween; the first elongated suspension element being connected via the first end thereof to a first point on the object's first half, and being connected via the second end thereof to a first point on the vehicle's lower surface disposed closer to the object's second half than to the first half thereof; the second elongated suspension element being connected via the first end thereof to a second point on the object's second half, and being connected via the second end thereof to a second point on the vehicle's lower surface disposed closer to the object's first half than to the second half thereof.

2. The vehicle of Claim 1, wherein said first and second points on the lower surface of the vehicle are separated by a distance of at least 200 mm.

3. The vehicle of Claims 1 or 2, wherein said first half of the object further comprises a first peripheral edge extending between the rear and front edges, and the second half of the object further comprises a second peripheral edge extending between the rear and front edges, and, in a plan view of the object and lower surface of the vehicle, the first point on the lower surface of the vehicle is spaced from the second peripheral edge in a direction away from the first peripheral edge and/or spaced from the front edge of the object in a direction away from the rear edge of the object.

4. The vehicle of any one of Claims 1 to 3, wherein said first half of the object further comprises a first peripheral edge extending between the rear and front edges, and the second half of the object further comprises a second peripheral edge extending between the rear and front edges, and, in a plan view of the object and lower surface of the vehicle, the second point on the lower surface of the vehicle is spaced from the first peripheral edge in a direction away from the second peripheral edge and/or spaced from the front edge of the object in a direction away from the rear edge of the object.

5. The vehicle of any one of Claims 1 to 4, wherein said first and second points on the object are each disposed closer to the front edge of the object than the rear edge thereof.

6. The vehicle of any one of Claims 1 to 5, wherein, in the plan view of the object and lower surface of the vehicle, said first and second points on the object are each disposed closer to the front edge of the object than the rear edge thereof.

7. The vehicle of any one of Claims 1 to 6, wherein said suspension apparatus further comprises third and fourth elongated suspension elements; the third elongated suspension element being connected at a first end thereof to a third point on the object's first half, and connected at the second end thereof to a third point on the lower surface of the vehicle; the fourth elongated suspension element being connected at the first end thereof to a fourth point on the object's second half, and connected at the second end thereof to a fourth point on the lower surface of the vehicle; the first and second points on the object being closer to the front edge thereof than to the rear edge thereof, and the third and fourth points on the object being closer to the rear edge of the object than to the front edge thereof; the first and third points on the lower surface of the vehicle constituting a single spatial point and the second and fourth points on the lower surface of the vehicle constituting a single spatial point, or the first and fourth points on the lower surface of the vehicle constituting a single spatial point and the second and third points on the lower surface of the vehicle constituting a single spatial point, or the first, second, third and fourth point on the lower surface of the vehicle are all spaced from each other.

8. The vehicle of Claim 7, wherein said first and second points on the object are closer to the front edge thereof than to the rear edge thereof, and the third and fourth points on the object are closer to the rear edge of the object than to the front edge thereof.

9. The vehicle of Claim 8, wherein said third and fourth elongated suspension elements are more tensioned than the first and second elongated suspension elements.

10. The vehicle of any one of Claims 1 to 9, wherein said suspension apparatus further comprises first and second connection elongated suspension elements, each having first and second ends and an intermediate portion therebetween; wherein said first elongated suspension element being connected via the second end thereof to a first point on the vehicle's lower surface being via the first connection elongated suspension element being connected at a first end thereof to the second end of the first elongated suspension element, and the first connection elongated suspension element's second end being connected being connected to the first point on the lower surface of the vehicle; wherein said second elongated suspension element being connected via the second end thereof to a second point on the vehicle's lower surface being via the second connection elongated suspension element being connected at a first end thereof to the second end of the second elongated suspension element, and the second connection elongated suspension element's second end being connected being connected to the second point on the lower surface of the vehicle.

11. The vehicle of any one of Claims 1 to 10, wherein said object further having lower and upper portions, the lower portion of the object being biased for pivotal motion towards the upper portion; the suspension apparatus further comprises at least one fast release detachment mechanism connected to the first and second elongated suspension elements; the fast release detachment mechanism being adapted to be brought from an attached state to a detached state; wherein when the object is held in a suspended position and the fast release detachment mechanism is in the attached state, the lower portion of the object is arrested from pivoting towards the upper portion thereof by the first and second elongated suspension elements being connected between the object's lower portion and the lower surface of the vehicle, and when the fast release detachment mechanism is brought to the detached state, there is no longer connection of the first and second elongated suspension elements between the object's lower portion and the lower surface of the vehicle allowing pivotal motion of the object's lower portion.

12. A method for suspending an object in a vehicle with elongated suspension elements, the object comprising lower and upper portions, the lower portion comprising a rear edge proximate the upper portion and a front edge distal therefrom, the vehicle having lower and upper surfaces; each of the elongated suspension elements comprising first and second ends and an intermediate portion extending therebetween, the method comprising:
(a) connecting the upper portion of the object to the upper surface of the vehicle via at least one of the elongated suspension elements, thereby at least partially suspending the object above the lower surface of the vehicle; connecting a first end of at least one other elongated suspension element to the object's lower portion proximate the rear edge, and connecting the second end of the same elongated suspension element to the lower surface of the vehicle; and subsequently
(b) tensioning the at least one elongated suspension element connected between the object and the lower surface of the vehicle using a tensioning mechanism; and subsequently
(c) connecting at least one other elongated suspension element to the object's lower portion proximate the front edge, and connecting the second end of the same at least one elongated suspension element to the lower surface of the vehicle.

13. A vehicle having a passageway and suspension system, the suspension system comprising a suspension seat at least partially blocking a portion of the passageway when in a first state and enabling passage through the portion of the passageway when in a second state.

14. The vehicle of Claim 13, wherein said suspension seat further comprises a seat portion and a back portion; the suspension system further comprises a suspension apparatus adapted to suspend the suspension seat with the seat portion in a substantially horizontal orientation; the back portion of the suspension seat being adapted to be brought to a deployed state and an undeployed state, wherein in the deployed state the back portion is in a substantially vertical orientation occupying a back-support region of the suspension system above the seat portion thereby causing said at least partially blocking of the passageway, and in the undeployed state the back portion has at least a part thereof moved away from the back-support region for said enabling of passage through the portion of the passageway via the back-support region of the suspension apparatus.

15. A suspension system for use in a vehicle; the suspension system comprising a first object and a suspension apparatus for holding the first object in a suspended position in a vehicle; the suspension apparatus comprising at least one elongated suspension element adapted to hold the first object in the suspended position; the suspension apparatus and/or the first object being adapted to at least partially suspend an additional object, the additional object being disposed at a height above the first object or at its side when the first object is seen in the front view.

16. The vehicle of Claim 15, wherein said additional object is a storage unit disposed at a height above the first object, the storage unit engaging said at least one elongated suspension element.

17. The vehicle of Claim 15, wherein the first object has a sheet-like form with a transverse dimension thereof being far greater than the thickness, the first object comprising first and second ends and an intermediate portion therebetween, the first and second ends being adapted for connection to the at least one elongated suspension element and to be suspended thereby, the first object being further adapted for having an object detachably attached thereto and for holding the object in a suspended position.

18. The vehicle of Claim 15, wherein the suspension system further comprises a second object and a platform; each of the first and second objects being adapted to be held by the suspension apparatus in a suspended position via the at least one elongated suspension elements; the suspension system being adapted to at least partially suspend the platform via the first and second objects.

19. The vehicle of Claim 18, wherein the platform is an elevated floor spaced at least 250mm lower than a bottom surface of the first and/or second object.

20. A vehicle comprising an upper surface, an object and a suspension apparatus for holding the object in a suspended position in the vehicle; the object having a first imaginary vertical reference plane symmetrically dividing it into two halves and a second imaginary vertical reference plane perpendicular to the first plane; the suspension apparatus comprising two pairs of elongated suspension elements each comprising first end and second ends and an intermediate portion extending therebetween, and being adapted to anchor the object to the upper surface of the vehicle; the first ends of each pair of elongated suspension elements engaging an object connection point disposed on the object, the object connection points of the two pairs being disposed at different sides of the first plane; each pair having a second end of one of the elongated suspension elements engaging a first vehicle connection point disposed on the upper surface of the vehicle, and a second end of the other elongated suspension element engaging a second vehicle connection point disposed on the upper surface of the vehicle, the first and second vehicle connection points being disposed at different sides of the second plane; the first vehicle connection points of the two pairs being disposed closer to each other than the second vehicle connection points of the two pairs.

21. A vehicle comprising inner surfaces, an object, and a suspension apparatus for holding the object in a suspended position in the vehicle; the suspension apparatus comprising a dynamic connection element mounted on one of said inner surfaces of the vehicle, a first static connection element mounted on one of said inner surfaces of the vehicle, a second static connection element mounted on the object, and an elongated suspension element adapted to hold the object in the suspended position; the elongated suspension element comprising first and second ends and an intermediate portion extending therebetween; the elongated suspension element engaging the dynamic connection element via the intermediate portion thereof, and engaging the first and second static connection elements via the first and second ends thereof.

22. The vehicle of Claim 21, wherein said first and second static connection elements and the dynamic connection elements being disposed in a non-linear path.

23. A vehicle comprising inner surfaces, an object and a suspension apparatus; the suspension apparatus comprising at least one elongated suspension element adapted to hold the object in the suspended position, a tensioning strap, a tensioning mechanism engaging the tensioning strap, and a dynamic connection element mounted on one of said inner surfaces of the vehicle; the tensioning strap comprising first and second ends and an intermediate portion extending therebetween; the tensioning mechanism being mounted on the object or on one of the inner surfaces; the intermediate portion of the tensioning strap engaging the dynamic connection element in a manner that allows the intermediate portion to move relative to the dynamic connection element, when the tensioning mechanism is operated.

24. A vehicle comprising inner surfaces, an object and a suspension apparatus for holding the object in a suspended position in the vehicle; the suspension apparatus comprising a single tensioning strap, a single tensioning mechanism engaging the tensioning strap, and at least one elongated suspension element adapted to hold the object in the suspended position; the tensioning strap having a first end, a second end and a intermediate portion extending therebetween; one of the first end of the tensioning strap and tensioning mechanism being secured to the object and the other one being secured to one of the inner surfaces of the vehicle; and when the tensioning mechanism is operated, thereby causing the tensioning strap to become taut, the object is moved in a desired direction causing the at least one elongated suspension element to become taut and suspend the object in the suspended position.

25. A suspension seat and a suspension apparatus adapted to hold the seat in a suspended position; the suspension seat comprising a back portion, a rigid seat portion, and a rigid support member; the suspension apparatus comprising at least one elongated suspension element; the rigid support member having first and second ends and an intermediate portion extending therebetween; the first end of the rigid support member and the rigid seat portion are adapted for static connection with each other at a seat point spaced from the at least one elongated suspension element; the second end of the rigid support member and the at least one elongated suspension element are adapted for static connection with each other at an element point spaced from the seat portion.

26. A suspension system adapted for at least partially suspending an object in a suspended position in a vehicle via at least one elongated suspension element, the suspension system comprising a suspended holder adapted for connection to at least one elongated suspension element and to be suspended thereby, the holder being further adapted for having an object detachably attached thereto and for holding the object in a suspended position; the holder having a sheet-like form with a transverse dimension thereof being far greater than the thickness, and comprising first and second ends and an intermediate portion therebetween, the first and second ends being adapted for connection to the at least one elongated suspension element for suspension thereby.
